# EUROPÄISCHE PATENTSCHRIFT

(11) **EP 3 877 346 B1**
(45) Veröffentlichungstag und Bekanntmachung des Hinweises auf die Patenterteilung: **07.01.2026**
(21) Anmeldenummer: 19797746.5
(22) Anmeldetag: 07.11.2019
(51) Int. Cl.: C03C 3/095, C03C 3/097, C03C 10/00, C03C 27/02, C03C 27/04, H01B 17/30, C03C 3/062

(54) **FÜGEVERBINDUNG UMFASSEND EIN ISOLIERENDES BAUTEIL, INSBESONDERE MIT EINEM ZUMINDEST TEILWEISE KRISTALLISIERTEN GLAS, DEREN VERWENDUNG SOWIE EIN KRISTALLISIERBARES SOWIE ZUMINDEST TEILWEISE KRISTALLISIERTES GLAS UND DESSEN VERWENDUNG**
JOINT CONNECTION COMPRISING A CRYSTALLISED GLASS, ITS USE, CRYSTALLISABLE AND AT LEAST PARTIALLY CRYSTALLISED GLASS AND ITS USE
JOINTURE COMPRENANT UN VERRE CRISTALLISÉ, SON UTILISATION AINSI QUE VERRE AU MOINS PARTIELLEMENT CRISTALLISÉ AINSI QUE CRISTALLISABLE ET SON UTILISATION

(30) Priorität: 07.11.2018 DE 102018127748; 01.02.2019 DE 102019102525; 21.06.2019 EP 19181866
(43) Veröffentlichungstag der Anmeldung: 15.09.2021
(73) Patentinhaber: SCHOTT AG, 55122 Mainz (DE)
(72) Erfinder: MITRA, Ina, 55271 Stadecken-Elsheim (DE); MIX, Christian, 84036 Landshut (DE); RAMDOHR, Björn, 84032 Landshut (DE); HARTL, Hartmut, 1210 Wien (AT); STRONCZEK, Mark, 80639 München (DE)
(74) Vertreter: Blumbach · Zinngrebe Patentanwälte PartG mbB
(86) Internationale Anmeldenummer: PCT/EP2019/080467
(87) Internationale Veröffentlichungsnummer: WO 2020/094755

(56) Entgegenhaltungen:
- WO-A1-2018/066635
- DE-A1- 102015 207 285
- DE-B3- 102012 206 266
- US-A1- 2016 236 967

## Beschreibung

Die Erfindung betrifft ein kristallisierbares oder ein zumindest teilweise kristallisiertes Glas und dessen Verwendung, ein Erzeugnis und eine Fügeverbindung umfassend ein isolierendes Bauteil, mit einem zumindest teilweise kristallisierten Glas, deren Verwendung.

Für Fügeverbindungen bestehen vielfältige Einsatzbereiche, bei welchen sowohl die Temperaturfestigkeit, mechanische Stabilität als auch deren Widerstand von Bedeutung sein können.

Befinden sich derartige Fügeverbindungen, beispielsweise zur Durchführung elektrischer oder elektronischer Signale in Abschnitten von Abgasanlagen von Brennkraftmaschinen, beispielsweise bei Kraftfahrzeugen mit einer geregelten Abgasreinigung, so kommt es häufig zu sich stark ändernden Umgebungsbedingungen. Beispielsweise im Kaltstartbetrieb, insbesondere in kälteren Regionen oder bei hoher Luftfeuchtigkeit, können derartige Fügeverbindungen mit Feuchtefilmen aus kondensierten atmosphärischen Bestandteilen belegt sein. Diese Kondensation kann sich in einer Tröpfchenbildung oder sogar einer vollflächigen Belegung der Fügeverbindung äußern. Hierdurch kann sich der elektrische Widerstand zwischen Fügepartner ungewünscht ändern und eine entsprechende Regelung der Abgasreinigung in deren Regelverhalten beeinträchtig werden.

Obwohl äußerst hochohmige Isolationsmaterialien, wie nachfolgend noch detaillierter anhand kristallisierbarer oder zumindest teilweise kristallisierter Gläser beispielhaft ausgeführt wird, verwendet werden können, sind dieses jedoch in einer derartigen Umgebung häufig für ein unbeeinträchtigtes Regelverhalten nicht sicher genug gegenüber den vorstehend beschriebenen Beeinträchtigungen ausgebildet.

Das Dokument DE 10 2008 045 816 A1 schlägt ein einen Leiter umgebendes, elastomeres Material vor, um eine Kriechstrecke, welches im Rahmen dieser Offenbarung diejenige Strecke ist, entlang welcher sich Kriechströme zwischen den Fügepartner ausbilden können, zu verlängern. Nachteilig ist bei dieser Lösung, dass elastomere Materialien häufig nicht über die für den Heißbereich von Abgasanlangen nötige thermische Stabilität sowie Dauerbetriebsfestigkeit verfügen,

Ein Aspekt der vorliegenden Erfindung befasst sich damit, die elektrischen oder elektronischen, insbesondere hochohmigen Eigenschaften der hier offenbarten Isolationsmaterialien, insbesondere der hier offenbarten kristallisierbaren oder teilweise kristallisierten Gläser besser gegenüber Umwelteinflüssen zu schützen.

Dieser Aspekt der Aufgabe der Erfindung wird gelöst durch eine Fügeverbindung umfassend ein elektrisch isolierendes Bauteil sowie zumindest zwei Fügepartner, wobei zumindest einer der Fügepartner 51, 52 von zumindest einem anderen der Fügepartner 51, 52 durch das elektrisch isolierende Bauteil 53 elektrisch isoliert gehalten ist, und die Oberfläche des elektrisch isolierenden Bauteils 53, welche sich zwischen den Fügepartnern erstreckt, eine Struktur S, insbesondere eine Erhebung oder Absenkung ausbildet, durch welche insbesondere der direkte Weg von dem zumindest einen Fügepartner zu dem zumindest einen anderen Fügepartner entlang der Oberfläche gegenüber einer Oberfläche ohne diese Struktur S verlängert ist und wobei die Struktur vorzugsweise zumindest einen Fügepartner vollständig umgibt, wobei das isolierende Bauteil oder die Struktur kristallisierbares oder zumindest teilweise kristallisiertes Glas und dessen Verwendung umfasst oder aus diesem besteht.

Elektrisch Isoliert gehalten bezeichnet im Rahmen der vorliegenden Offenbarung eine Art des Haltens, bei welcher ein Gleichstromwiderstand zwischen den sich in trockener Atmosphäre befindlichen Fügepartnern der vorliegen beschrieben Fügeverbindung, auf welcher sich keine Ablagerungen befinden, welche diesen Widerstand beeinträchtigen könnten, größer als 100 MΩ beträgt, wobei dieser elektrische Widerstandswerte bei Spannungen von weniger als 100 V gemessen ist.

Die vorstehend erwähnte Struktur S kann einstückig und materialidentisch mit dem Abschnitt des isolierenden Bauteils ausgebildet sein, welcher sich zwischen den Fügepartnern mit diesem jeweils verbunden und vorzugsweise an diese jeweils angeglast erstreckt, wobei vorzugsweise das Material des isolierenden Bauteils ein zumindest teilweise kristallisiertes Glas und dessen Verwendung umfasst.

Im Übergangsbereich zwischen der Oberfläche des Fügepartners und der Oberfläche des zumindest teilweise kristallisierten Glases kann bei den vorliegen offenbarten Fügeverbindungen eine zumindest überwiegend amorphe Glasschicht angeordnet sein, die bevorzugt weniger als 10 Poren pro cm³ umfasst und/oder bevorzugt eine Dicke von 5 µm oder weniger, besonders bevorzugt von 2 µm oder weniger und ganz besonders bevorzugt 1 µm oder weniger aufweist.

Bei den hier beschriebenen Fügeverbindungen kann die Struktur S kristallisierbares oder zumindest teilweise kristallisiertes Glas umfassen und an der Oberfläche der Struktur S eine zumindest überwiegend amorphe Glasschicht, insbesondere als Glasschicht ausgebildet sein, welche im Wesentlichen keine offenen Poren aufweist und insbesondere weniger als 10 Poren /cm³ umfasst, die eine Dicke von 5 µm oder weniger, bevorzugt von 2 µm oder weniger und ganz besonders bevorzugt von 1 µm oder weniger aufweist.

Es werden nachfolgend auch Ausführungsformen von Fügeverbindung offenbart, bei welchen die Struktur S nicht materialidentisch mit dem Abschnitt des isolierenden Bauteils ist, welcher sich zwischen den Fügepartnern mit diesem jeweils verbunden und vorzugsweise an diese jeweils angeglast, erstreckt,

Bei einer solchen Fügeverbindung, bei welcher die Struktur S nicht materialidentisch mit dem Abschnitt des isolierenden Bauteils ist, welcher sich zwischen den Fügepartnern mit diesem jeweils verbunden und vorzugsweise an diese jeweils angeglast erstreckt und eine hochtemperaturstabiles keramisches Material, beispielsweise Forsterite, eine Aluminiumoxid-basierte Keramik oder eine Zirkoniumoxid-basierte Keramik, beispielsweise eine Keramik umfassend Y-stabilisiertes Zirkoniumoxid, umfasst.

Bei der Fügeverbindung, bei welcher die Struktur S nicht materialidentisch mit dem Abschnitt des isolierenden Bauteils ist, welcher sich zwischen den Fügepartnern mit diesem jeweils verbunden und vorzugsweise an diesen jeweils angeglast erstreckt, kann die Struktur S in etwa mittig in radialer Richtung an diesem Abschnitt des isolierenden Bauteils und vorzugsweise zumindest abschnittsweise in diesen hineinragend angeordnet sein.

Bei einer vorteilhaften Fügeverbindung, bei welcher die Struktur S eine Verstärkung enthält, kann die Verstärkung ein Metallblech, eine Metallfolie oder ein Metall umfassendes Gelege, Geflecht oder Gestrick umfassen wobei vorzugsweise das Metall einen Stahl umfasst oder aus diesem besteht.

Bei den vorliegend offenbarten Ausführungsformen kann die Struktur S Kanten aufweisen, welche einen Verrundungsradius Rv von weniger als einem Zehntel Millimeter, vorzugsweise von weniger als einem Zwanzigstel Millimeter und mehr als 10 µm aufweisen.

Mit dem kristallisierbaren bzw. mit dem zumindest teilweise kristallisierten Glas entsprechend den hier beschriebenen Ausführungsformen ist es mittels der vorliegend beschriebenen Struktur S möglich, die Oberfläche des isolierenden Materials, welche zwischen voneinander zu isolierenden Fügepartner angeordnet ist, zu vergrößern und damit die an der Oberfläche des insolierenden Bauteils verlaufende Kriechstrecke zu verlängern.

Das kristallisierbare bzw. zumindest teilweise kristallisierte Glas nach den hier beschriebenen Ausführungsformen erlaubt die Ausbildung von hochtemperaturstabilen und/oder mechanisch hochfesten Fügeverbindungen. Wie vorstehend ausgeführt ist es mit einem kristallisierbaren bzw. zumindest teilweise kristallisierten Glas nach den beschriebenen Ausführungsformen möglich, ein besonders stabiles Gefüge im zumindest teilweise kristallisierten Glas auszubilden, insbesondere ein Gefüge, welches auch bei hohen Temperaturen bis 1000°C oder sogar darüber mechanisch stabil ausgebildet ist.

Ein weiterer Aspekt betriff folglich kristallisierbare Gläser sowie Gläser, welche zumindest teilweise kristallisiert vorliegen, und unter anderem im Bereich der Lotgläser Verwendung finden.

Lotgläser (auch als Glaslote bzw. auf Englisch als "sealing glasses" bezeichnet) werden verwendet, um dichte Verbindungen zwischen zu fügenden Bauteilen herzustellen. Diese Verbindungen werden auch als Fügeverbunde oder Fügeverbindungen bezeichnet.

Zur Herstellung von stabilen Fügeverbindungen, die betrieblich sehr hohen Temperaturen ausgesetzt sind, beispielsweise Temperaturen von 900°C oder mehr, beispielsweise auch bei Temperaturen um 1000°C, werden regelmäßig Lotgläser benötigt, die zum einen diesen hohen Temperaturen standhalten und zum anderen in ihrem Ausdehnungsverhalten den zu fügenden Materialien angepasst sind. Bei den zu fügenden Materialien handelt es sich beispielsweise um hochtemperaturfeste Metalle und / oder Metalllegierungen oder auch um hochtemperaturfeste, nichtmetallische Materialien, wie Yttrium-stabilisiertes ZrO₂.

Des Weiteren müssen die Fügeverbindungen hermetisch dicht sein und bei der Verwendung insbesondere in elektrischen Bauteilen, wie in der Sensortechnik und / oder in Brennstoffzellen, elektrisch isolierend wirken, also nur eine sehr geringe elektrische Leitfähigkeit besitzen.

Kommerziell erhältliche Glaslote mit hoher thermischer Ausdehnung weisen allerdings im Allgemeinen niedrige Einschmelztemperaturen auf, womit ihre thermische Stabilität begrenzt ist und diese Glaslote somit nicht bei hohen Temperaturen einsetzbar sind. Umgekehrt weisen Glaslote für hohe Temperaturbereiche thermische Ausdehnungskoeffizienten auf, die sehr weit unterhalb der thermischen Ausdehnungskoeffizienten der hochtemperaturfesten Fügepartner liegen.

Im Stand der Technik werden unterschiedliche Glaslote zur Herstellung von Fügeverbindungen vorgeschlagen.

Die deutsche Patentanmeldung DE 100 16 416 A1 beschreibt glaskeramische Einschmelzungen, wobei das verwendete Ausgangsglas aus 38 Gew.-% bis 48 Gew.-% SiO₂, 15 Gew.-% bis 19 Gew.-% Al₂IO₃, 4,5 Gew.-% bis 11 Gew.-% TiO₂, 0 Gew.-% bis 1,5 Gew.-% Na₂O, 0 Gew.-% bis 1,5 Gew.-% K₂O und 23 Gew.-% bis 30 Gew.-% CaO besteht, wobei auch bis zu 1,5 Gew.-% Li₂O zugesetzt sein können. Mit diesen Zusammensetzungen können thermische Ausdehnungskoeffizienten im Temperaturbereich von 100°C bis 500°C von maximal 8,8 * 10⁻⁶/K erzielt werden.

Das deutsche Patent DE 10 2012 206 266 B3 beschreibt ein barium- und strontiumfreies glasiges oder glaskeramisches Fügematerial und dessen Verwendung. Zur Herstellung einer ausreichenden Benetzung der zu verbindenden Bauteile umfasst das Fügematerial B₂O₃.

Die deutsche Offenlegungsschrift DE 10 2014 218 983 A1 beschreibt ein Durchführungselement für harte Betriebsbedingungen. Auch hier umfasst das Fügematerial B₂O₃.

In der Offenlegungsschrift DE 10 2010 035 251 A9 wird ein Hochtemperatur-Glaslot sowie dessen Verwendung beschrieben. Das Glaslot umfasst mindestens 10 Gew.-% BaO. BaO ist jedoch nachteilig, da Barium mit den in hochwarmfesten, also hochtemperaturfesten, Stählen enthaltenen Cr reagiert.

Die Offenlegungsschrift DE 10 2015 207 285 A1 beschreibt ein glasiges oder zumindest teilweise kristallisiertes Einschmelzmaterial. Dieses enthält mindestens 5 Mol-% B₂O₃.

Ein Hochtemperatur-Glaslot sowie dessen Verwendung beschreibt die DE 10 2011 080 352 A1. Das beschriebene Hochtemperatur-Glaslot umfasst zwischen 13 Gew.-% und 50 Gew.-% Al₂O₃, wobei SiO₂ lediglich optional vom Glaslot umfasst ist.

Die US-amerikanische Patentanmeldung US 2007/0238599 A1 beschreibt hochkristalline gesinterte Glaskeramiken, welche Cyclosilikate umfassen. Gemäß einer Ausführungsform umfassen die Glaskeramiken der US 2007/0238599 A1 als notwendige Bestandteile zwischen 30 Gew.-% und 55 Gew.-% SiO₂, zwischen 5 Gew.-% und 40 Gew.-% CaO und zwischen 0,1 Gew.-% und 10 Gew.-% Al₂O₃, wobei die Summe der von der Glaskeramik umfassten Oxide BaO, CaO und SrO zwischen 40 Gew.-% und 65 Gew.-% beträgt. Mit anderen Worten umfassen die Glaskeramiken der US 2007/0238599 A1 also neben CaO stets noch BaO und/oder SrO.

Die US-amerikanische Patentanmeldung US 2010/0129726 A1 beschreibt ein bleifreies Glas mit geringem B₂O₃-Gehalt, wobei der Gehalt des Glases an den Oxiden von SiO₂, MgO, CaO, SrO, BaO, ZnO und Al₂O₃ mindestens 97 Mol-% beträgt.

Glaskeramische Zusammensetzungen für Dichtungen sind weiterhin in US 2013/0108946 A1 beschrieben. Die Zusammensetzungen bestehen entweder aus SiO₂, Al₂O₃ und CaO oder aus SiO₂, Al₂O₃, CaO und SrO oder aus SiO₂, Al₂O₃ und La₂O₃ sowie noch weiteren ausgewählten Komponenten.

Reddy et al. beschreiben in RSC Advances, 2012, 2, 10955-10967, Melilith-basierte Gläser und Glaskeramiken für funktionelle Anwendungen, wie beispielsweise für Dichtungen. Als Kristallisationsagens wirkt insbesondere Bi₂O₃.

Die internationale Patentanmeldung WO 2017/220700 A1 beschreibt eine mit einem zumindest teilweise kristallisierten Glas hergestellte Verbindung sowie ein Verfahren zur Herstellung einer solchen Verbindung, wobei das zumindest teilweise kristallisierte Glas mindestens eine Kristallphase und Poren aufweist, die in dem zumindest teilweise kristallisierten Glas strukturiert verteilt angeordnet sind.

Die US-Patentanmeldung US 2016/236967 A1 beschreibt eine Glaszusammensetzung für ein kristallisierbares Glas umfassend im Wesentlichen kein Boroxid, keine Alkalimetalloxide oder Aluminiumoxid, sondern umfassen, in Mol-% SiO2: 40-55, BaO: 18-35, TiO₂+ZrO₂: 0.1-10, ZnO: 0-15, CaO: 0-20, MgO: 0-9, SrO: 0-5, and La₂O₃: 0-2, wobei der Gesamtgehalt von RO (mit R: Mg, Ca, Sr, Ba und Zn) wenigstens 44 Mol-%, und wobei die Glaszusammensetzung beim Einbrennen als Glaspulver bei einer Temperatur zwischen 850-1050°C in ein kristallisiertes Glas umgewandelt wird, das einen thermischen Ausdehnungskoeffizienten von 90-150*10⁻⁷/K im Bereich von 50-850°C aufweist.

Schließlich beschreibt die internationale Patentanmeldung WO 2018/066635 A1 eine Glaszusammensetzung zum Fügen oder Verbinden. Die Zusammensetzung enthält 43 Mol-% bis 53 Mol-% SiO₂, 12 Mol-% bis 33 Mol-% CaO, 12 Mol-% bis 33 Mol-% MgO und 1 Mol-% bis 7 Mol-% La₂O₃ sowie 0 Mol-% bis 4,5 Mol-% ZnO.

Alle vorgenannten Materialien des Standes der Technik weisen Nachteile auf.

So umfassen die Zusammensetzungen nach DE 10 2012 206 266 B3, DE 10 2014 218 983 A1 sowie DE 10 2015 207 285 A1 zwingend B₂O₃. Auch die in der internationalen Patentanmeldung WO 2017/220700 A1 beschriebenen Gläser umfassen vorzugsweise B₂O₃. B₂O₃ ist jedoch ein Material, welches bereits bei relativ niedrigen Temperaturen schmilzt, und wird daher, wie auch vorstehend bereits beschrieben, häufig zur Sicherstellung einer ausreichenden Benetzung der zu fügenden Bauteile beim Schmelzen verwendet. Jedoch sind auf diese Weise keine hohen thermischen Beständigkeiten der Fügeverbindung realisierbar.

Sofern Fügematerialien BaO und / oder SrO enthalten, kommt es zu störenden Kontaktreaktionen mit hochtemperaturfesten Stählen, welche in der Regel Cr umfassen.

Sofern Cyclosilikate als kristalline Phasen entstehen, weisen diese zu niedrige thermische Ausdehnungskoeffizienten von etwa 8 * 10⁻⁶/K auf.

Ungünstig sind zudem hohe Gehalte von keimbildenden Materialien, beispielsweise von TiO₂, welche zu einer unkontrollierten, nicht steuerbaren Kristallisation des kristallisierbaren Glases führen können. Darüber hinaus kann es im für die hier betrachteten Anwendungen ungünstigsten Fall durch TiO₂ sogar zur Ausbildung niedrig dehnender Kristallphasen kommen.

Bei sehr hohen Gehalten an Komponenten, die in Kristallphasen eingebaut werden, wie dies beispielsweise in US 2010/0129726 A1 beschrieben ist, ist die Benetzung des zu fügenden Materials, mithin die Eignung als Fügematerial, fraglich.

Es besteht somit Bedarf an kristallisierbaren Gläsern, vorzugsweise mit hoher thermischer Beständigkeit, wie einer Temperaturbeständigkeit von 900°C oder sogar mehr, welche die zu fügenden Materialien und /oder Bauteile beim Einschmelzen benetzen und vorzugsweise einen hohen thermischen Ausdehnungskoeffizienten aufweisen

Ein weiterer Aspekt der Aufgabe der vorliegenden Erfindung besteht daher auch in der Bereitstellung von kristallisierbaren Gläsern, welche die vorgenannten Schwächen des Standes der Technik überwinden oder zumindest mildern.

Dieser weitere Aspekt der Aufgabe der Erfindung wird gelöst durch den Gegenstand der unabhängigen Ansprüche. Weiterbildungen und spezielle Ausführungsformen finden sich in den abhängigen Ansprüchen sowie den Figuren und der Beschreibung.

Die Offenbarung zu diesem weiteren Aspekt der Erfindung betrifft eine Fügeverbindung, insbesondere eine hochtemperaturstabile und/oder eine mechanisch hochbelastbare Fügeverbindung, umfassend ein zumindest teilweise kristallisiertes Glas und einen Fügepartner, wobei das zumindest teilweise kristallisierte Glas einen Restglasanteil von weniger als 10 %, vorzugsweise von weniger als 5 %, bezogen auf das Volumen, umfasst. Das zumindest teilweise kristallisierte Glas umfasst dabei Kristallaggregate. Die Kristallaggregate sind gebildet aus einer Vielzahl von Kristalliten. Vorzugsweise sind die Kristallite nadelig und/oder plättchenförmig ausgebildet. Vorzugsweise können die Kristallite radialstrahlig, wie sphärolithisch und/oder fächerförmig, und/oder stabförmig und/oder plättchenförmig das zumindest teilweise kristallisierte Glas durchsetzend angeordnet sein.

Eine solche Ausgestaltung einer Fügeverbindung weist eine Reihe von Vorteilen auf.

Insbesondere wird durch den geringen Restglasanteil von weniger als 10 Vol.-%, vorzugsweise sogar von weniger als 5 Vol.-%, eine hohe Formstabilität der Fügeverbindung erzielt.

Die hohe Formstabilität der Fügeverbindung wird weiterhin vorteilhaft dadurch gewährleistet, dass die vom kristallisierten Glas umfassten Kristallite aggregiert sind. Eine nadelige und/oder plättchenförmige Ausbildung der Kristallite ist dabei besonders vorteilhaft. Die Erfinder haben herausgefunden, dass die nadelige und/oder plättchenförmige Ausbildung der Kristallite in den Kristallaggregaten zu einer mechanisch stabilen Ausbildung des zumindest teilweise kristallisierten Glases führt. Dies ist insbesondere dann der Fall, wenn die vorzugsweise nadelig und/oder plättchenförmig ausgebildeten Kristallite beispielsweise sphärolithisch und/oder fächerförmig und/oder stabförmig bzw. plättchenförmig das zumindest teilweise kristallisierte Glas durchsetzend angeordnet sind. Die Erfinder vermuten, dass es durch die vorzugsweise nadelige und/oder plättchenförmige Ausbildung der Kristallite und deren Anordnung in beispielsweise Sphärolithen oder radialstrahlig oder auch stabförmig-regellos das zumindest teilweise kristallisierte Glas durchsetzend es zu einer Verzahnung der Kristallite kommt, was die mechanische Stabilität des zumindest teilweise kristallisierten Glases, beispielsweise gegen Scher-, Druck- oder Zugkräfte, vorteilhaft erhöht. Diese Verzahnung kann auch in der Form erfolgen, dass eine Art "Kartenhausstruktur" vorliegt.

Die Kristallite können auch plättchenförmig ausgebildet sein, also als kleine Plättchen das kristallisierte Glas durchsetzen. Im Schnittbild stellt sich eine solche Ausbildung ebenfalls als Stab dar, weswegen eine Unterscheidung im Einzelfall schwierig ist. Als Plättchen wird im Rahmen der vorliegenden Offenbarung eine geometrische Form verstanden, bei welchem die laterale Abmessung in einer Raumrichtung eines kartesischen Koordinatensystems (die Dicke) eine Größenordnung geringer ausgebildet ist als die lateralen Abmessungen (Länge, Breite) in den beiden anderen, zur ersten Richtung senkrechten Richtungen.

Die Offenbarung betrifft weiterhin eine Fügeverbindung, insbesondere eine hochtemperaturstabile und/oder eine mechanisch hochbelastbare Fügeverbindung, umfassend ein zumindest teilweise kristallisiertes Glas und einen Fügepartner, wobei das Glas umfasst

| | |
|---|---|
| La₂O₃ | größer 0,3 Mol-% bis kleiner 5 Mol-%, vorzugsweise kleiner oder gleich 4,5 Mol-%, besonders bevorzugt kleiner oder gleich 4 Mol-%, |
| Nb₂O₅ | 0 Mol-% bis 9 Mol-%, |
| Ta₂O₅ | 0 Mol-% bis 7 Mol-%, |

wobei

| | |
|---|---|
| Σ(A₂O₅) | größer 0,2 Mol-% bis 9 Mol-%, |

wobei A ein Element ist, welches in Oxiden üblicherweise die Oxidationszahl V+ aufweist, und beispielsweise Nb und/oder Ta oder P und / oder Mischungen hiervon umfasst oder umfassen kann.

Es hat sich gezeigt, dass eine feste Fügeverbindung, beispielsweise eine hochtemperaturstabile und/oder eine mechanisch hochbelastbare Fügeverbindung, durch eine ausreichende, d.h. eine in den oben genannten Grenzen liegende, Zugabe der Oxide La₂O₃, Ta₂O₅ und / oder Nb₂O₅ sowie ggf. weiterer Oxide des Zusammensetzung A₂O₅ erzielt werden kann.

A bezeichnet hierbei ein Element, welches in Oxiden üblicherweise die Oxidationszahl V+ aufweist. So ist es möglich, dass nicht alle vom kristallisierbaren oder zumindest teilweise kristallisierten Glas umfassten Atome "A" in derselben Oxidationsstufe vorliegen.

Die Oxide La₂O₃, Nb₂O₅ und Ta₂O₅ sowie gegebenenfalls weitere vom Glas umfasste Oxide A₂O₅ werden dabei im Rahmen der vorliegenden Offenbarung auch als "Glasmatrix bildende Oxide" bezeichnet, wobei unter diesem Begriff im Rahmen der vorliegenden Offenbarung zu verstehen ist, dass solche Oxide nach der thermischen Behandlung des kristallisierbaren Glases, also wenn das Glas als zumindest teilweise kristallisiertes Glas vorliegt, zunächst in der Glasmatrix verbleiben. Der Begriff der "Glasmatrix-bildende Oxide" unterscheidet sich damit vom allgemeineren Begriff der "glasbildenden Oxide". Insbesondere sind die Oxide von MgO und CaO im Rahmen der vorliegenden Offenbarung keine Glasmatrix-bildenden Oxide, auch wenn beispielsweise CaO ein üblicher Bestandteil herkömmlicher Gläser, beispielsweise von Kalk-Natron-Gläsern, ist. In den Gläsern gemäß Ausführungsformen der vorliegenden Offenbarung werden Oxide wie CaO und MgO in die Kristallphasen eingebaut, verbleiben also gerade nicht in der Glasmatrix und sind daher auch keine Glasmatrix-bildenden Oxide.

Es ist aber durchaus möglich, dass zumindest ein Teil der Glasmatrix-bildenden Oxide, beispielsweise La₂O₃, im weiteren Verlauf der Keramisierung zumindest teilweise in Kristallphasen eingebaut werden können. Jedoch verbleibt normalerweise ein wenn auch geringer Restgehalt an glasiger Phase, welcher insbesondere durch die Glasmatrix-bildenden Oxide gebildet wird.

Die Ausbildung der Fügeverbindung gemäß der vorliegenden Offenbarung mit den Oxiden La₂O₃ sowie Nb₂O₅ und/oder Ta₂O₅ sowie ggf. weiterer Oxide A₂O₅ in den oben genannten Grenzen ist vorteilhaft, da das zumindest teilweise kristallisierte Glas auf diese Weise besonders vorteilhaft so ausgestaltet ist, dass während einer Temperaturbehandlung zur Erzeugung der Verbindung ein Anglasen erfolgt. Auf diese Weise wird also besonders vorteilhaft eine feste Verbindung zwischen den einzelnen Teilen der Fügeverbindung erzeugt, insbesondere eine feste Verbindung des zumindest teilweise kristallisierten Glases an den Fügepartner ermöglicht. Die Begrenzung der Glasmatrix bildenden Oxide in den vorgenannten Grenzen stellt jedoch vorteilhaft sicher, dass gleichzeitig eine hohe Temperaturstabilität und/oder eine hohe mechanische Festigkeit des Fügeverbundes gegeben ist.

Im Rahmen der vorliegenden Offenbarung gelten die folgenden Definitionen:
Im Rahmen der vorliegenden Offenbarung wird als kristallisierbares Glas ein Glas verstanden, welches einer Kristallisation, insbesondere einer gesteuerten oder zumindest steuerbaren Kristallisation, zugänglich ist. Unter einer gesteuerten Kristallisation wird hierbei verstanden, dass durch eine gezielte Temperaturbehandlung das kristallisierbare Glas in einen Zustand überführt werden kann, in welchem das Glas zumindest teilweise kristallisiert vorliegt und wobei die kristallographischen Zusammensetzung des zumindest teilweise kristallisierten Glases und / oder dessen Gefüge, d.h. die räumliche Anordnung und / oder die Größe der vom zumindest teilweise kristallisierten Glas umfassten Kristalle und / oder Kristallite vorzugsweise gezielt eingestellt wird. Vorzugsweise kann durch eine gesteuerte Kristallisation beispielsweise ein Gefüge erhalten werden, bei welchem die Kristallite eine im Wesentlichen einheitliche Größe beispielsweise im einstelligen Mikrometerbereich aufweisen, also beispielsweise alle Kristallite einen Äquivalentdurchmesser von etwa 1 µm bis 3 µm aufweisen.

Selbstverständlich sind auch andere Gefüge mit größeren oder kleineren Kristalliten möglich.

Sofern das zumindest teilweise kristallisierte Glas mehrere unterschiedliche Kristallphasen umfasst, ist es auch möglich, dass die durchschnittliche Kristall- oder Kristallitgröße innerhalb einer Kristallphase relativ ähnlich ist, jedoch möglicherweise zwischen den einzelnen Kristallphasen hinsichtlich der Kristallitgröße starke Unterschiede bestehen.

Im Gegensatz zur vorzugsweise gesteuerten oder steuerbaren Kristallisation ist die spontane Kristallisation eines Glases zu sehen, bei der unerwartet Kristallphasen, häufig auch unerwünschte Kristallphasen auftreten und insbesondere auch eine vollständige Entglasung auftreten kann.

Im Rahmen der vorliegenden Offenbarung wird unter einem Kristallaggregat oder unter einer Kristallvergesellschaftung eine Verwachsung von mindestens zwei Kristallen oder Kristalliten verstanden. Die Kristalle oder Kristallite können dabei insbesondere regellos miteinander verwachsen sein. Dies bedeutet, dass die einzelnen Kristallite oder Kristalle eines Aggregats nicht entlang einer Vorzugsrichtung oder entlang einer bestimmten Kristallebene miteinander verwachsen sein müssen.

Unter einer nadeligen Ausbildung eines Kristalls oder eines Kristallits wird verstanden, dass der Kristall oder Kristallit eine Richtung aufweist, in der seine Abmessung mindestens eine Größenordnung größer ist als die Abmessungen in den beiden anderen Raumrichtungen. Mit anderen Worten kann ein Kristall oder Kristallit mit einer nadeligen Ausbildung nadelförmig oder stabförmig oder in Form eines Prismas ausgebildet sein, wobei die lateralen Abmessungen der prismatischen Grundform mindestens eine Größenordnung kleiner sind als die Länge des Kristalls oder Kristallits. Solche Kristalle oder Kristallite werden auch als prismatisch ausgebildet bezeichnet.

Die Kristallite können auch plättchenförmig ausgebildet sein, also als kleine Plättchen das kristallisierte Glas durchsetzen. Im Schnittbild stellt sich eine solche Ausbildung ebenfalls als Stab dar, weswegen eine Unterscheidung im Einzelfall schwierig ist. Als Plättchen wird im Rahmen der vorliegenden Offenbarung eine geometrische Form verstanden, bei welchem die laterale Abmessung in einer Raumrichtung eines kartesischen Koordinatensystems (die Dicke) eine Größenordnung geringer ausgebildet ist als die lateralen Abmessungen (Länge, Breite) in den beiden anderen, zur ersten Richtung senkrechten Richtungen.

Unter einer radialstrahligen Anordnung von Kristallen oder Kristalliten wird im Rahmen der vorliegenden Offenbarung verstanden, dass nadelig oder plättchenförmig ausgebildete Kristalle, beispielsweise nadelförmige oder prismatische Kristalle oder Kristallite um ein Zentrum herum angeordnet sind, sodass ein Ende in Richtung desselben Punktes zeigt und das jeweilige andere Ende in unterschiedliche Raumrichtungen radial nach außen zeigt. Beispielsweise können sich die Enden, welche in Richtung des Zentrums zeigen, am zentralen Punkt berühren. Dies ist jedoch ncht notwendig. Eine solche Ausbildung von Kristallaggregaten, die von einem Zentrum aus radial nach außen zeigen, liegt beispielsweise in Form einer sphärolithischen Ausbildung eines Kristallaggregats vor. Eine solche sphärolithische Ausbildung ist eine annähernd kugelige oder ellipsoide Ausgestaltung des Kristallaggregats und kann in zweidimensionaler Darstellung annähernd die Form eines Kreises aufweisen. In der Praxis kommt es jedoch aufgrund der Verwachsungen von Kristallen und Kristallaggregaten in einem Gefüge oft zur Abweichung von der idealen kugeligen oder kreisförmigen Ausbildung eines Sphäroliths. Insbesondere können die den Sphärolith bildenden Kristalle oder Kristallite unterschiedliche Längen und/oder Dicken aufweisen.

Eine weitere Ausgestaltung einer radialstrahligen Anordnung ist eine fächerförmige Ausbildung im zweidimensionalen Schnitt. Beispielsweise ist es möglich, dass eine Ausbildung der Kristalle oder Kristallite in einer bestimmten Raumrichtung im Gefüge nicht möglich ist. Die Kristallite oder Kristalle streben auch hier von einem Zentrum nach außen, jedoch nur innerhalb eines bestimmten Raumwinkels.

Unter einer stabförmig oder plättchenförmig durchsetzenden Anordnung wird verstanden, dass die einzelnen Kristalle oder Kristallite nicht von einem gemeinsamen Zentrum aus in unterschiedliche Raumrichtungen nach außen streben, sondern regellos, beispielsweise ohne ausgesprochene Vorzugsrichtung, angeordnet sind. Insbesondere können die Kristallite oder Kristalle gegeneinander verzahnt angeordnet sein. Eine solche Struktur kann beispielsweise auch mit dem Aufbau eines "Kartenhauses" verglichen werden, bei welchem die einzelnen Plättchen (wie die Karten eines Kartenhauses) gegeneinander angeordnet sind und eine stabile Struktur bilden.

Im Rahmen der vorliegenden Offenbarung wird unter einem Kristallisationskeim ein Ausgangspunkt für eine Kristallisation verstanden. Der Kristallisationskeim begünstigt die Anlagerung von Atomen zum Aufbau eines kristallinen Gitters beispielsweise thermodynamisch oder kinetisch. Insbesondere kann es sich bei einem Kristallisationskeim um eine Gitterfehlstehle und/oder eine Anordnung von Atomen handeln. Häufig können Grenzflächen Ausgangspunkte für Kristallisation sein bzw. umfassen Grenzflächen solche Ausgangspunkte für eine Kristallisation.

Gemäß einer Ausführungsform der Fügeverbindung umfassen die Kristallite zumindest teilweise an den Korngrenzen Kristallisationskeime und/oder sind an den Korngrenzen der Kristallite zumindest teilweise Anreicherungen umfassend Lanthan, insbesondere umfassend Lanthanverbindungen, angeordnet.

Eine solche Ausgestaltung einer Fügeverbindung ist vorteilhaft, um die Ausbildung einer besonders festen Verbindung zwischen zumindest teilweise kristallisiertem Glas und Fügepartner zu ermöglichen. Sofern die Kristallite zumindest teilweise an den Korngrenzen Kristallisationskeime umfassen, fördert dies die Ausbildung des Gefüges des zumindest teilweise kristallisierten Glases umfassend Kristallaggregate mit beispielsweise radialstrahliger oder stabförmig oder plättchenförmig durchsetzender Anordnung, beispielsweise in der Art eines Kartenhauses.

Dies ist ebenfalls der Fall, wenn an den Korngrenzen der Kristallite zumindest teilweise Anreicherungen umfassend Lanthan, insbesondere umfassend Lanthanverbindungen, angeordnet sind. Die Erfinder vermuten, dass Anreicherungen von Lanthan, beispielsweise von Lanthanverbindungen, als effektive Kristallisationskeime wirken können.

Gemäß einer weiteren Ausführung der Fügeverbindung beträgt der Betrag der Differenz der thermischen Ausdehnungskoeffizienten von Fügepartner und zumindest teilweise kristallisiertem Glas 5*10⁻⁶/K oder weniger, vorzugsweise 3*10⁻⁶/K oder weniger und besonders bevorzugt 1*10⁻⁶/K oder weniger. Eine solche Ausgestaltung der Fügeverbindung, insbesondere also die Anpassung der thermischen Ausdehnungskoeffizienten des Glases und des Fügepartners hat den vorteilhaften Effekt, dass auf diese Weise die thermische und/oder mechanische Beständigkeit der so erhaltenen Fügeverbindung weiter verbessert werden kann.

Die Fügeverbindung kann hohen Betriebstemperaturen ausgesetzt werden. Insbesondere sind Betriebstemperaturen von 1000 °C und mehr möglich. Es wird vermutet, dass das Vorhandensein und die beschriebene Struktur der Kristallaggregate das Material mechanisch stabilisiert, beispielsweise indem die Kristallaggregate ineinander greifen und sozusagen miteinander verzahnen. Ist eine Restglasphase enthalten, kann auch diese durch die Kristallaggregate und/oder deren Struktur stabilisiert werden, sogar wenn die Restglasphase aufgrund Temperatureinwirkung sozusagen aufweichen sollte.

Ebenso vorteilhaft ist die Fügeverbindung mechanisch stabil, insbesondere gegen Vibrationsbelastungen. Diese werden auch abhängig von der Temperatur in Rüttel- und Vibrationstests gemessen entsprechend der ISO 16750-3 (Fassung 2007-08-01). Es wird vermutet, dass die Kristallaggregate die Ausbreitung von Initialrissen im Material unterdrücken und so selbst bei lokal auftretenden Schädigungen ein Versagen eines Bauteils mit der Fügeverbindung vermieden wird.

Gemäß einer Ausführungsform der Offenbarung hält die Fügeverbindung also Betriebstemperaturen von zumindest 1000 °C stand, bevorzugt ist die Fügeverbindung rüttel- und vibrationsstabil gemessen nach ISO 16750-3.

Mit anderen Worten ausgedrückt scheinen die Kristallaggregate im Betriebszustand einem Verschieben von Volumenelementen des zumindest teilweise kristallisierten Glases gegeneinander entgegenzuwirken. Die kann man sich so vorstellen, dass zwei beliebige benachbarte Volumenelemente enthaltend Kristallaggregate betrachtet werden. Im Betriebszustand bei mechanischer Belastung kann Kraft auf die Volumenelemente wirken, beispielsweise eine Scherkraft, welche die Volumenelemente gegeneinander verschieben möchte. Haben die Kristallaggregate eine geeignete Struktur, insbesondere die genannte Struktur, können diese ineinander greifen und so schon rein mechanisch die Verschiebung der Volumenelemente gegeneinander unterdrücken.

Gemäß einer nochmals weiteren Ausführungsform der Fügeverbindung wirken also im Betriebszustand die Kristallaggregate dem Verschieben von Volumenelementen des zumindest teilweise kristallisierten Glases gegeneinander entgegen.

Die genannten Maßnahmen können dabei insbesondere vorteilhaft auch zusammenwirken.

Vorzugsweise ist die Fügeverbindung so ausgestaltet, dass die Oberfläche des zumindest teilweise kristallisierten Glases meniskusfrei ist bzw. einen neutralen Meniskus aufweist.

Unter einer meniskusfreien Ausbildung der Oberfläche wird hier verstanden, dass die Oberfläche nicht gewölbt ausgebildet ist. Eine gewölbte Ausbildung der Oberfläche des zumindest teilweise kristallisierten Glases kann beispielsweise dann resultieren, wenn das Glas zum Herstellen der Fügeverbindung erhitzt wird und dabei zumindest teilweise aufschmilzt (sogenanntes Anglasen) und dabei den Fügepartner besonders gut benetzt, sodass infolge der Kapillarkräfte an der Grenzfläche zum Fügepartner das Glas nach oben steigt. In diesem Fall ist der Meniskus konkav ausgebildet. Liegt hingegen nur eine geringe Benetzung vor, beispielsweise wenn ein sehr hochviskoses Glas vorliegt, kann es zur Ausbildung eines konvexen Meniskus kommen. Optimalerweise ist die Fügeverbindung jedoch so ausgestaltet, dass die Oberfläche des zumindest teilweise kristallisierten Glases meniskusfrei, d.h. ohne Wölbung nach oben oder unten, ausgebildet ist. In diesem Fall wird auch von einem neutralen Meniskus gesprochen.

Gemäß einer weiteren Ausführungsform der Fügeverbindung ist im Übergangsbereich zwischen der Oberfläche des Fügepartners und der Oberfläche des zumindest teilweise kristallisierten Glases eine zumindest überwiegend amorphe Glasschicht angeordnet, die bevorzugt weniger als 10 Poren pro cm³ umfasst und/oder bevorzugt eine Dicke von 5 µm oder weniger, besonders bevorzugt von 2 µm oder weniger und ganz besonders bevorzugt von 1 µm oder weniger aufweist.

Eine solche Ausgestaltung der Fügeverbindung ist vorteilhaft, weil auf diese Weise eine besonders feste Verbindung erzielt werden kann. Insbesondere führt eine geringe Porosität an der Grenzfläche zwischen dem zumindest teilweise kristallisierten Glas und dem Fügepartner vorteilhaft zu einer weiteren Erhöhung der mechanischen und/oder der thermischen Beständigkeit der Verbindung. Poren an der Grenzfläche oder in der Nähe der Grenzfläche können nämlich Ausgangspunkt für mechanisches Versagen sein, insbesondere, wenn die Fügeverbindung hohen Temperaturen ausgesetzt ist.

Auch die lediglich geringe Dicke einer amorphen Glasschicht an der Grenzfläche unterstützt vorteilhaft die Ausbildung einer Fügeverbindung, welche beispielsweise thermisch und/oder mechanisch hochbelastbar ist. Die Ausbildung der Glasschicht bedeutet, dass eine chemische Verbindung zwischen dem Fügepartner und dem Glas vorliegt. Jedoch ist es gemäß der vorliegenden Offenbarung insbesondere vorteilhaft, wenn die das zumindest teilweise kristallisierte Glas einen Restglasanteil von weniger als 10 Vol.-%, bevorzugt von weniger als 5 Vol-% aufweist. Mit anderen Worten sollte das zumindest teilweise kristallisierte Glas nur einen geringen Restglasanteil aufweisen. Dies liegt daran, dass die thermische und/oder die mechanische Stabilität der Fügeverbindung insbesondere durch die Ausbildung der kristallinen Phase bzw. der kristallinen Phasen resultiert. Eine hohe thermische und/oder mechanische Belastbarkeit ist vorteilhaft somit insbesondere dann gewährleistet, wenn die amorphe Glasschicht eine geringe Dicke von höchstens 5 µm oder weniger, vorzugsweise von 2 µm oder weniger und besonders bevorzugt von 1 µm oder weniger aufweist.

Gemäß einer Ausführungsform der Fügeverbindung umfasst der Fügepartner ein Metall, insbesondere ein Metall aus der Gruppe der Stähle, beispielsweise der Normalstähle, Edelstähle, nichtrostende Stähle und der hochtemperaturstabilen ferritische Stähle, welche auch bekannt sind unter dem Markennamen Thermax, beispielsweise Thermax 4016, Thermax4742, oder Thermax4762 oder Crofer22 APU oder CroFer22 H oder NiFe-basierte Materialien, beispielsweise NiFe45, NiFe47 oder vernickelte Pins, oder bekannt unter dem Markennamen Inconel, beispielsweise Inconel 718 oder X-750, oder Stähle, beispielsweise bekannt unter den Bezeichnungen CF25, Alloy 600, Alloy 601, Alloy 625, Alloy 690, SUS310S, SUS430, SUH446 oder SUS316, oder austenitische Stähle wie 1.4762, 1.4828 oder 1.4841, Kanthal Heizdraht oder eine hochtemperaturstabile keramische Verbindung, beispielsweise Forsterite, eine Aluminiumoxid-basierte Keramik oder eine Zirkoniumoxid-basierte Keramik, beispielsweise eine Keramik umfassend Y-stabilisiertes Zirkoniumoxid.

Gemäß einer Ausführungsform weist die Fügeverbindung eine Helium-Leckrate von kleiner als 10⁻⁸ mbar * I/s auf und/oder umfasst gemäß einer Ausführungsform ein zumindest teilweise kristallisiertes Glas, welches einen E-Modul zwischen 80 GPa und 200 GPa aufweist, vorzugsweise einen E-Modul zwischen 100 GPa und 125 GPa. Eine solche Ausgestaltung ist vorteilhaft, da auf diese Weise zwar eine ausreichende mechanische Steifigkeit erzielt wird, jedoch im Vergleich beispielsweise zu üblichen Keramiken eine solche Verbindung elastischer ist. Dies ist vorteilhaft bei Temperaturwechselbelastungen und führt daher in vorteilhafter Weise zu einer besonders temperaturstabilen Fügeverbindung.

Die Offenbarung betrifft weiterhin ein kristallisierbares oder ein zumindest teilweise kristallisiertes Glas, umfassend

| | |
|---|---|
| La₂O₃ | größer 0,3 Mol-% bis kleiner 5 Mol-%, vorzugsweise kleiner oder gleich 4,5 Mol-%, besonders bevorzugt kleiner oder gleich 4 Mol-%, |
| Nb₂O₅ | 0 Mol-% bis 9 Mol-%, |
| Ta₂O₅ | 0 Mol-% bis 7 Mol-%, |

wobei

| | |
|---|---|
| Σ(A₂O₅) | größer 0,2 Mol-% bis 9 Mol-%, |

wobei A ein Element ist, welches in Oxiden üblicherweise die Oxidationszahl V+ aufweist, und beispielsweise Nb und/oder Ta oder P und / oder Mischungen hiervon umfassen kann.

Es hat sich gezeigt, dass eine feste Verbindung des Glases mit den Fügepartnern durch eine ausreichende, d.h. eine in den oben genannten Grenzen liegende, Zugabe der Oxide La₂O₃, Ta₂O₅ und / oder Nb₂O₅ sowie ggf. weiterer Oxide des Zusammensetzung A₂O₅ erzielt werden kann.

A bezeichnet hierbei ein Element, welches in Oxiden üblicherweise die Oxidationszahl V+ aufweist. So ist es möglich, dass nicht alle vom kristallisierbaren oder zumindest teilweise kristallisierten Glas umfassten Atome "A" in derselben Oxidationsstufe vorliegen.

Die Oxide La₂O₃, Nb₂O₅ und Ta₂O₅ sowie gegebenenfalls weitere vom Glas umfasste Oxide A₂O₅ werden dabei im Rahmen der vorliegenden Offenbarung auch als "Glasmatrix bildende Oxide" bezeichnet, wobei unter diesem Begriff im Rahmen der vorliegenden Offenbarung zu verstehen ist, dass solche Oxide nach der thermischen Behandlung des kristallisierbaren Glases, also wenn das Glas als zumindest teilweise kristallisiertes Glas vorliegt, zunächst in der Glasmatrix verbleiben. Der Begriff der "Glasmatrix-bildende Oxide" unterscheidet sich damit vom allgemeineren Begriff der "glasbildenden Oxide". Insbesondere sind die Oxide von MgO und CaO im Rahmen der vorliegenden Offenbarung keine Glasmatrix-bildenden Oxide, auch wenn beispielsweise CaO ein üblicher Bestandteil herkömmlicher Gläser, beispielsweise von Kalk-Natron-Gläsern, ist. In den Gläsern gemäß Ausführungsformen der vorliegenden Offenbarung werden Oxide wie CaO und MgO in die Kristallphasen eingebaut, verbleiben also gerade nicht in der Glasmatrix und sind daher auch keine Glasmatrix-bildenden Oxide.

Es ist aber durchaus möglich, dass ein oder mehrere Glasmatrix-bildendes Oxide im späteren Verlauf der Keramisierung zumindest teilweise in Kristallphasen eingebaut werden, wie beispielsweise La₂O₃. Jedoch verbleibt in der Regel ein Restglasanteil, welcher von den sogenannten Glasmatrix-bildenden Oxiden gebildet wird.

Die Zugabe der Komponenten La₂O₃, Ta₂O₅ und / oder Nb₂O₅ sowie ggf. weiteren Oxiden A₂O₅ trägt zunächst zur hohen Glasstabilität des Ausgangsmaterials bei. Wie bereits ausgeführt, handelt es sich bei diesen Oxiden um solche Oxide, welche nach der thermischen Behandlung, d.h. also einer thermischen Behandlung, durch welche das kristallisierbare Glas in ein zumindest teilweise kristallisiertes Glas überführt werden kann, zumindest zunächst weiterhin in der die Kristallite und / oder Kristalle umhüllenden Glasmatrix verbleiben.

Die Erfinder gehen davon aus, dass sich diese Komponenten, wenn überhaupt, erst im späteren Verlauf der thermischen Behandlung zu kristallinen Gefügebestandteilen umwandeln und / oder in diese eingebaut werden. Insbesondere kann zumindest die Komponente La₂O₃ zumindest teilweise in kristalline Phasen eingebaut werden.

Dabei hat sich überraschenderweise gezeigt, dass genau die glasige Gefügekomponente, welche insbesondere die vorstehend aufgeführten Oxide umfassen kann, wie La₂O₃, Ta₂O₅ und / oder Nb₂O₅ sowie ggf. weiteren Oxiden A₂O₅, sowohl eine feste Verbindung mit den Fügepartnern, also den zu fügenden Materialien und/oder Bauteilen, sicherstellt und trotzdem einer hohen Formbeständigkeit der resultierenden Verbindung bei hohen Temperaturen, wie Temperaturen von 900°C oder sogar von 950°C oder 1000°C oder mehr, nicht entgegensteht.

Im Rahmen der vorliegenden Offenbarung wird ein Material und/oder ein Bauteil als hochtemperaturfest oder hochtemperaturstabil bezeichnet, wenn es bei einer Temperatur von 900°C und mehr, vorzugsweise von 950°C und mehr und besonders bevorzugt von 1000°C und mehr eingesetzt werden kann, insbesondere, wenn es bei einer Temperatur von 900°C oder mehr, vorzugsweise 950°C oder mehr und besonders bevorzugt 1000°C und mehr 100 h oder mehr, vorzugweise 500 h und mehr und besonders bevorzugt 1000 h eingesetzt werden kann. Insbesondere kann das Material und/oder das Bauteil bei diesen Temperaturen über die genannten Zeiträume stabil gegen Verformungen ausgebildet sein.

Diese hohe Formbeständigkeit wird wiederum einem relativ frühen Start der Kristallisation zugeschrieben. Aufgrund der Glasmatrix steht diese jedoch nicht der festen Verbindung der Fügepartner entgegen. Dies ist besonders überraschend, da bislang davon ausgegangen wurde, dass eine feste, dichte Verbindung nur erhalten werden konnte, wenn die Kristallisation erst nach Abschluss der Sinterung eintrat, siehe beispielsweise Tulyaganov et al., Journal of Power Sources 242 (2013), 486-502.

Weitere Komponenten, welche vom Glas umfasst sein können und zumindest teilweise nach der thermischen Behandlung in der Glasmatrix verbleiben, sind Bi₂O₃ und / oder P₂O₅. Jedoch sind diese Komponenten hinsichtlich der hier adressierten hohen Temperaturstabilität des Glases und der mit diesem Glas hergestellten Fügeverbindung nachteilig. Vorteilhaft ist das Glas gemäß einer Ausführungsform daher bis auf unvermeidliche Spuren frei von Oxiden von Bi und / oder P.

Als unvermeidliche Spuren einer Komponente werden im Rahmen der vorliegenden Offenbarung Gehalte dieser Komponente bezeichnet, welche 500 ppm oder weniger betragen. Die Einheit "ppm" ist hierbei auf das Gewicht bezogen.

Gemäß einer nochmals weiteren Ausführungsform ist das Glas bis auf unvermeidliche Spuren frei von Oxiden von Alkalien und / oder von Bor. Insbesondere bedeutet dies, dass gemäß einer besonders bevorzugten Ausführungsform der Erfindung das Glas höchstens 500 ppm B₂O₃ umfasst. Die Freiheit des Glases gemäß dieser Ausführungsformen von Alkalioxiden und/oder von B₂O₃ ist vorteilhaft, da die vorgenannten Komponenten die Temperaturbeständigkeit des kristallisierbaren oder zumindest teilweise kristallisierten Glases herabsetzen. Darüber hinaus könnten möglicherweise diese Komponenten, wie bestimmte Alkalien, zur Ausbildung von für die hier adressierten Anwendungen unerwünschten Kristallphasen mit niedriger Ausdehnung führen. Darüber hinaus sind Alkaligehalte unvorteilhaft, da sie den elektrischen Widerstand senken.

Das Glas umfasst ein Oxid RO und es gilt

| | |
|---|---|
| Σ(RO) | kleiner oder gleich 55 Mol-%, |

wobei R ein Element ist, welches in Oxiden üblicherweise die Oxidationszahl II+ aufweist, und insbesondere Ca, Mg oder Zn und / oder Mischungen hiervon umfasst.

RO umfasst also mit anderen Worten Erdalkalioxide sowie ZnO. Gemäß einer bevorzugten Ausführungsform der Offenbarung ist das Glas bis auf unvermeidliche Spuren frei von den Erdalkalioxiden BaO und/oder SrO, um störende Kontaktreaktionen des Glases mit Chrom-haltigen Fügematerialien, wie beispielsweise Chrom-haltigen Stählen, zu vermeiden.

Das Glas umfasst

| | |
|---|---|
| SiO₂ | 30 Mol-% bis 40 Mol-%, |
| Al₂O₃ | 3 Mol-% bis 12 Mol-%, |
| CaO | 32 Mol-% bis 46 Mol-%, |
| MgO | 5 Mol-% bis 15 Mol-%, |
| ZnO | 0 Mol-% bis 10 Mol-%, |

sowie optional

| | |
|---|---|
| ZrO₂ | 0 Mol-% bis 4 Mol-%, vorzugsweise höchstens 3 Mol-%, und/oder |
| TiO₂ | 0 Mol-% bis 4 Mol-%, vorzugsweise höchstens 3 Mol-%, und/oder |
| MnO₂ | 0 Mol-% bis 5 Mol-%. |

Optional können gemäß einer Ausführungsform TiO₂, ZrO₂ und / oder MnO₂ vom Glas umfasst sein. Jedoch ist der Gehalt dieser Komponenten im Glas begrenzt. Insbesondere werden TiO₂ und ZrO₂, welches bekannte Keimbildner sind, im kristallisierbaren Glas als Keimbildner nicht benötigt. Darüber hinaus kann ihre Anwesenheit störend sein, da im ungünstigsten Fall für die vorliegende Anwendung unerwünschte niedrigdehnende Kristallphasen entstehen können.

Gemäß einer weiteren Ausführungsform beträgt der Gehalt des Glases an CaO zwischen mindestens 35 Mol-% und höchstens 46 Mol-%, vorzugsweise zwischen mindestens 35 Mol-% und weniger als 43,5 Mol-% und / oder
der Gehalt des Glases an MgO beträgt zwischen 5 Mol-% und weniger als 13 Mol-%.

Die begrenzten Gehalte des Glases an CaO und / oder an MgO sind darauf zurückzuführen, dass auf diese Weise die Stabilität des kristallisierbaren Glases gegen spontane Kristallisation weiter erhöht wird. So handelt es sich bei CaO und MgO jeweils um Komponenten, welche in die Kristallphasen eingebaut werden, die durch thermische Behandlung des kristallisierbaren Glases entstehen. Wie vorstehend ausgeführt, ist es hierbei für die adressierten Anwendungen von besonderer Bedeutung, dass Kristallphasen mit einem hohen thermischen Ausdehnungskoeffizienten erhalten werden. Um zu fördern, dass überwiegend gerade die gewünschten Kristallphasen mit hohem thermischen Ausdehnungskoeffizienten erhalten werden, werden daher bevorzugt die Gehalte des Glases an CaO und MgO wie vorstehend ausgeführt weiter begrenzt. Diese Begrenzung dient insbesondere dazu, die Entstehung von Wollastonit, Enstatit oder Diopsid bzw. von Mischkristallen dieser kristallinen Phasen zumindest soweit als möglich zu verhindern oder sogar gänzlich zu unterbinden.

Gemäß einer weiteren Ausführungsform liegt das Glas als kristallisierbares Glas vor und weist eine Transformationstemperatur von mehr als 720°C auf.

Die Transformationstemperatur eines Glases ist eine wichtige charakteristische Größe, in der sich sowohl Verarbeitungseigenschaften dieses Glases als auch dessen thermische Beständigkeit widerspiegeln. Insbesondere geht mit einer hohen Transformationstemperatur des Glases auch eine hohe Formbeständigkeit des Glases einher.

Vorzugsweise weist daher das kristallisierbare Glas gemäß einer Ausführungsform eine besonders hohe Formstabilität auf, was sich in der angegebenen hohen Transformations- oder Glasübergangstemperatur T_{g} von 720°C oder mehr widerspiegelt.

Gemäß einer weiteren Ausführungsform beträgt der lineare thermische Ausdehnungskoeffizient des kristallisierbaren Glases in einem Temperaturbereich von 20°C bis 300°C mehr als 8 * 10⁻⁶/K sowie vorzugsweise in einem Temperaturbereich von 20°C bis 700°C mehr als 9 * 10⁻⁶/K. Auf diese Weise ist vorteilhaft bereits mit dem kristallisierbaren Glas vor dem Abschluss der thermischen Behandlung zur Herstellung der vorzugsweise hermetisch dichten Verbindung eine gute Anpassung des glasigen Materials an den linearen thermischen Ausdehnungskoeffizienten der zu fügenden Materialien, beispielsweise hochfeuerfeste Materialien wie Y-stabilisiertes ZrO₂ und / oder Legierungen, möglich.

Die Transformationstemperatur T_{g} ist bestimmt durch den Schnittpunkt der Tangenten an die beiden Äste der Ausdehnungskurve beim Messung mit einer Heizrate von 5K/min. Dies entspricht einer Messung nach ISO 7884-8 bzw. DIN 52324.

Die Erweichungstemperatur eines Glases, im Rahmen der vorliegenden Temperatur auch als "Ew" abgekürzt, bezeichnet die Temperatur, bei welcher die Viskosität des Glases einen Wert von 1 0^{7,6} dPa*s liegt.

Als Ausdehnungskoeffizient wird im Rahmen der vorliegenden Offenbarung der lineare thermische Ausdehnungskoeffizient angegeben. Sofern es sich um die Angabe des linearen thermischen Ausdehnungskoeffizienten für ein kristallisierbares Glas handelt, handelt es sich um den nominalen mittleren thermischen Längenausdehnungskoeffizienten gemäß ISO 7991, welcher in statischer Messung (mittels Schubstangendilatometer) bestimmt ist. Die Bestimmung des linearen thermischen Ausdehnungskoeffizienten für ein zumindest teilweise kristallisiertes Glas werden dilatometrisch bestimmt.

Im Rahmen der vorliegenden Offenbarung wird der lineare thermische Ausdehnungskoeffizient auch als α bezeichnet. Beispielsweise bezeichnet ein a(20-700) oder α₂₀₋₇₀₀ den linearen thermischen Ausdehnungskoeffizienten im Temperaturbereich von 20°C bis 700°C.

Gemäß einer nochmals weiteren Ausführungsform der Offenbarung liegt das Glas als zumindest teilweise kristallisiertes Glas vor und weist einen linearen thermischen Ausdehnungskoeffizienten im Temperaturbereich von 20°C bis 700°C von mehr als 9 * 10⁻⁶/K, vorzugsweise von mehr als 10 * 10⁻⁶/K, auf, wobei besonders vorzugsweise der lineare thermische Ausdehnungskoeffizient des zumindest teilweise kristallisierten Glases im Temperaturbereich von 20°C bis 1000°C mehr als 9 * 10 ⁻⁶/K, bevorzugt mehr als 9,5 * 10⁻⁶/K beträgt.

Gemäß Ausführungsformen der Offenbarung ist das Glas so ausgebildet, dass nicht nur vorzugsweise hermetisch dichte und / oder elektrisch isolierende Verbindungen herstellbar sind. Insbesondere können gemäß Ausführungsformen auch solche vorzugsweise hermetisch dichte und / oder elektrisch isolierende Verbindungen hergestellt werden, die auch bei hohen Temperaturen weiterhin ausreichende elektrische Isolation gewährleisten.

Als fluiddicht werden solche Verbindungen, beispielsweise Metall-Glas-Verbindungen, bezeichnet, wenn diese Verbindung abdichtet, also hier in diesem Fall gegen den Austritt oder Durchtritt von fluiden Medien dicht ist und bevorzugt im Wesentlichen vollständig (hermetisch) dicht ist. Die Dichtigkeit kann dabei durch einen Lecktest, üblicherweise mittels eines Helium-Lecktesters, bestimmt werden. Helium-Leckraten kleiner 1*10⁻⁸ mbar*l/s bei Raumtemperatur zeigen an, dass eine im Wesentlichen vollständig hermetische Dichtung vorliegt. Vorzugsweise kann diese Messung mit einer Druckbeaufschlagung von einem Bar erfolgen.

Gemäß dieser Ausführungsformen liegt das Glas als kristallisierbares Glas vor, wobei die Temperatur des kristallisierbaren Glases für den spezifischen elektrischen Widerstand von 10⁸ Ω * cm, vorzugsweise bestimmt nach DIN 52326, tₖ 100, 500°C oder mehr beträgt.

Das kristallisierbare oder zumindest teilweise kristallisierte Glas umfasst SiO₂ und CaO und MgO und Al₂O₃ sowie optional ZnO.

Im System SiO₂-Al₂O₃-CaO-MgO sind Kristallphasen mit hohem thermischen Ausdehnungskoeffizienten realisierbar. Darunter fallen beispielsweise Mischkristalle aus der Familie der CaO-reichen Calcium-Magnesium-Silikate, wie beispielsweise Äkermanit und / oder Merwinit, welche beispielsweise als Mischkristalle mit Al₂O₃ sich auch zu Gehlenit und / oder Augot ausbilden. Sofern das Glas auch ZnO umfasst, kann sich weiterhin als Mischkristall auch Hardystonit ausbilden.

Gemäß einer Ausführungsform liegt das Glas als zumindest teilweise kristallisiertes Glas vor und umfasst Kristallite von vorzugsweise CaO-reichen Calcium-Magnesium-Silikaten, insbesondere von CaO-reichen Calcium-Magnesium-Inselsilikaten und / oder -Gruppensilikaten. Inselsilikate sind hierbei solche Silikate, bei welchen die von Silikaten umfassten SiO₄-Tetraeder einzeln vorliegen, d.h. nicht miteinander verknüpft sind. In Gruppensilikaten sind Silikate, bei welchen zwei SiO₄-Tetraeder über einen gemeinsamen Brückensauerstoff miteinander verbunden sind, sodass als silikatische Struktureinheit Si₂O₇-Baugruppen vorliegen. Vorzugsweise kann das zumindest teilweise kristallisierte Glas als Inselsilikat Merwinit Ca₃Mg(SiO₄)₂ und / oder einen Mischkristall mit Merwinit-Struktur umfassen. Weiterhin kann das zumindest teilweise kristallisierte Glas alternativ oder zusätzlich als Gruppensilikat Kristallphasen mit Melilithstruktur umfassen, wie Äkermanit Ca₂MgSi₂O₇ oder Gehlenit Ca₂Al[AlSiO₇] oder Mischkristalle hiervon. Weiterhin kann das zumindest teilweise kristallisierte Glas gemäß einer Ausführungsform auch Kristallphasen mit Augit-Struktur umfassen.

Sofern im Rahmen der vorliegenden Offenbarung von einem Mischkristall gesprochen wird, handelt es sich dabei um einen Kristall, welcher nicht einer stöchiometrischen Verbindung entspricht. Sofern beispielsweise von einem "Åkermanit-Mischkristall" gesprochen wird, ist darunter ein Kristall zu verstehen, welcher nicht die stöchiometrische Zusammensetzung Ca₂MgSi₂O₇ aufweist. Beispielsweise ist es möglich, dass der Mischkristall mehr Ca umfasst als nach der stöchiometrischen Zusammensetzung, oder dass anstelle von Ca auch Zn eingebaut wurde. Jedoch kristallisiert der Mischkristall in einer Kristallstruktur, welche der von Äkermanit weitgehend entspricht, d.h. bis auf kleiner Abweichungen hinsichtlich beispielsweise der Gitterkonstanten.

Gemäß einer Ausführungsform liegt das Glas als zumindest teilweise kristallisiertes Glas vor und umfasst Kristallite von vorzugsweise CaO-reichen Calcium-Magnesium-Silikaten, insbesondere von CaO-reichen Calcium-Magnesium-Inselsilikaten und / oder -Gruppensilikaten, wie Merwinit und / oder einen Mischkristall mit Merwinitstruktur und alternativ oder zusätzlich eine Kristallphase mit Melilithstruktur, wie Äkermanit Ca₂MgSi₂O₇ und / oder Gehlenit Ca₂Al[AlSiO₇] und / oder Mischkristalle hiervon, und / oder Kristallphasen mit Augit-Struktur.

Die vorliegende Offenbarung betrifft auch eine Fügeverbindung umfassend ein zumindest teilweise kristallisiertes Glas, wobei das Glas ein zumindest teilweise kristallisiertes Glas nach Ausführungsformen der vorliegenden Offenbarung ist oder aus einem kristallisierbaren Glas nach Ausführungsformen der vorliegenden Offenbarung hergestellt oder herstellbar ist.

Unter einem Fügepartner im Sinne der vorliegenden Offenbarung wird ein Material oder ein Bauteil verstanden, welches zumeist mit einem anderen Material oder Bauteil zu einem vorzugsweise hermetisch dichten zusammengesetzten Bauteil zusammengesetzt oder gefügt wird oder werden soll. Sofern mehrere Fügepartner vorliegen, die verbunden werden sollen, können diese die gleiche oder eine abweichende Zusammensetzung aufweisen.

Im Rahmen der vorliegenden Offenbarung wird die Verbindung auch als Fügeverbund oder als Fügeverbindung bezeichnet.

Die Offenbarung betrifft auch ein Erzeugnis. Das Erzeugnis ist insbesondere ein Halteelement und/oder ein Isolationselement und/oder eine additive Struktur, umfassend ein zumindest teilweise kristallisiertes Glas gemäß Ausführungsformen der vorliegenden Offenbarung.

Vorzugsweise ist das Erzeugnis herstellbar aus einem Sinterkörper umfassend ein kristallisierbares Glas nach Ausführungsformen der vorliegenden Offenbarung. Bevorzugt umfasst der Sinterkörper das kristallisierbare Glas dabei als Glaspulver. Ganz besonders bevorzugt umfasst das Glaspulver Pulverkörner mit Kornoberflächen.

Weiterhin betrifft die Offenbarung die Verwendung einer Fügeverbindung gemäß Ausführungsformen der vorliegenden Offenbarung. Insbesondere kann die Verbindung in einem Sensor, wie einem Abgassensor, wie in einer Abgasanlage eines Automobils, einem Drucksensor, einem Partikelsensor, wie beispielsweise einem Rußpartikelsensor und/oder einem Temperatursensor und/oder einem NOₓ-Sensor und/oder einem Sauerstoffsensor, und/oder in einer Durchführung für einen Kompressor und/oder einem e-Kompressor und/oder als elektrische Stromdurchführung in einem Abgaselement und/oder in einer Brennstoffzelle und/oder in einer Durchführung für einen chemischen Reaktor, zum Einsatz kommen.

### Beispiele

Das vorliegend offenbarte kristallisierbare oder zumindest teilweise kristallisierte Glas sowie dessen Verwendung wird im Folgenden anhand von Beispielen näher erläutert.

Die folgende Tabelle zeigt beispielhaft Zusammensetzung von kristallisierbaren oder zumindest teilweise kristallisierten Gläsern. Die Zusammensetzungen sind jeweils in Mol-% angegeben. Bei den charakteristischen Temperaturen handelt es sich um die üblicherweise zur Beschreibung des Anschmelzverhaltens von Aschen verwendeten Temperaturen wie Erweichungstemperatur (abgekürzt: Erweich.), Sintertemperatur (abgekürzt: Sintern), Sphärischtemperatur (abgekürzt Sphär.), Halbkugeltemperatur (abgekürzt: Halbkugel) und Fließtemperatur, wie sie mittels eines Erhitzungsmikroskops (abgekürzt EHM) bestimmt werden. Die Ermittlung dieser Temperaturen erfolgt nach oder in Anlehnung an DIN 51730. Der thermische Ausdehnungskoeffizient α ist jeweils in Einheiten von 10⁻⁶/K angegeben.

**Tabelle 1 Zusammensetzungen von Gläsern gemäß Ausführungsformen**

| **Bsp. Nr.** | **1** | **2** | **3** | **4** | **5** | **6** | **7** | **8** |
|---|---|---|---|---|---|---|---|---|
| **SiO₂** | 36 | 34 | 36 | 34 | 34 | 38 | 35 | 35 |
| **Al₂O₃** | 7 | 6 | 7 | 6 | 9 | 5 | 7,7 | 7 |
| **B₂O₃** | | | | | | | | |
| **TiO₂** | | | | | | | | |
| **MnO₂** | | | | | | | | |
| **ZrO₂** | 2 | | | | | | | |
| **P₂O₅** | | | | | | | | |
| **Bi₂O₃** | | | | | | | | |
| **La₂O₃** | 2 | 2 | 2 | 4 | 1 | 2 | 2,6 | 2,2 |
| **Nb₂O₅** | 6 | | 3 | | 2 | 1 | 0,2 | 0,6 |
| **Ta₂O₅** | | 4 | | 2 | | | 0,3 | 0,6 |
| **Y₂O₃** | | | | | | | | |
| **R₂O** | | | | | | | | |
| **ZnO** | | 6 | | 4 | | 2 | 3 | 3,3 |
| **MgO** | 9 | 10 | 10 | 10 | 11 | 10 | 12,2 | 10,3 |
| **CaO** | 38 | 38 | 42 | 40 | 43 | 42 | 39 | 41 |
| **SrO** | | | | | | | | |
| **BaO** | | | | | | | | |
| **Summe** | 100 | 100 | 100 | 100 | 100 | 100 | 100 | 100 |
| | | | | | | | | |
| **Σ(RO)** | 47 | 54 | 52 | 54 | 54 | 54 | 54,2 | 54,6 |
| **CaO+MgO** | 47 | 48 | 52 | 50 | 54 | 52 | 51,2 | 51,3 |
| **Σ(R₂O₃+A₂O₅)** | 8 | 6 | 5 | 6 | 3 | 3 | 3,1 | 3,4 |
| **Σ(A₂O₅)** | 6 | 4 | 3 | 2 | 2 | 1 | 0,5 | 1,2 |
| **CaO/MgO** | 4,22 | 3,80 | 4,20 | 4,00 | 3,91 | 4,20 | 3,20 | 3,98 |

| **Temperaturen [°C]** | | | | | | | | |
|---|---|---|---|---|---|---|---|---|
| **EHM: Sintern** | | 767 | 772 | 772 | 770 | 762 | 765 | 770 |
| **EHM: Erweich.** | | 890 | 925 | | 922 | 811 | | |
| **Sphär.** | | 1282 | 1259 | | 1304 | | | |
| **Halbkugel** | 1198 | 1289 | 1265 | | 1320 | 1298 | 1340 | 1320 |

| **Kristallisierbares Glas** | | | | | | | | |
|---|---|---|---|---|---|---|---|---|
| **α (20;300°C)** | 8,28 | 8,33 | 8,8 | 8,81 | 8,46 | 8,72 | 8,47 | 8,64 |
| **α (20;700°C)** | 9,24 | 9,43 | 9,81 | 9,8 | 9,42 | 9,88 | 9,63 | 9,65 |
| **Tg[°C]** | 752 | 743 | 754 | 737 | 753 | 741 | 739 | 734 |
| **Ew[°C]** | | | 877 | | 883 | 873 | 878 | 875 |
| **Dichte[g/cm³]** | 3,43 | 3,77 | 3,27 | 3,64 | 3,13 | 3,22 | 3,28 | 3,32 |
| **tₖ100[°C]** | 572 | 596 | 588 | | 604 | 593 | 611 | 606 |
| **E-Modul[GPa]** | | | 107 | | 107 | 105 | 107 | 106 |

| **Kristallisiertes Glas** | | | | | | | | |
|---|---|---|---|---|---|---|---|---|
| Kristallisation erfolgte bei 1000°C/20 min | | | | | | | | |
| **α (20;700°C)** | 8,7 | 9,3 | 10,9 | 9,9 | 9,3 | 9,6 | 9,96 | 9,3 |
| **α (20;1000°C)** | 9,4 | 9,55 | 11,1 | 10,15 | 9,6 | 9,66 | 10,23 | 9,7 |
| | | | | | | | | |

| **Kristallisation** erfolgte bei 1040°C/200 min | | | | | | | | |
|---|---|---|---|---|---|---|---|---|
| **α (20;700°C)** | 10,53 | 9,2 | 10,3 | 9,7 | 9,7 | 10,2 | 9,25 | 10,15 |
| **α (20;1000°C)** | 10,25 | 9,55 | 10,75 | 10 | 9,65 | 10,35 | 9,15 | 10,2 |

**Tabelle 1 (fortgesetzt)**

| **Bsp. Nr.** | **9** | **10** | **11** | **12** | **13** | **14** | **15** | **16** |
|---|---|---|---|---|---|---|---|---|
| **SiO₂** | 33,2 | 34,5 | 35 | 36 | 35,3 | 36,8 | 36,4 | 35 |
| **Al₂O₃** | 10 | 6,6 | 6 | 8 | 7,7 | 6,6 | 8 | 6,6 |
| **B₂O₃** | | | | | | | | |
| **TiO₂** | | | | 2 | | | | |
| **MnO₂** | | | 2 | | | | | |
| **ZrO₂** | | | | | 1,2 | 0,3 | | |
| **P₂O₅** | | | | | | | | |
| **Bi₂O₃** | | | | | | | | |
| **La₂O₃** | 1,7 | 2,2 | 3 | 2,4 | 3 | 2,6 | 2,8 | 2,4 |
| **Nb₂O₅** | 1,2 | 1,6 | 2 | | 0,8 | 0,3 | 0,6 | 0,6 |
| **Ta₂O₅** | 0,5 | 0,1 | | 0,3 | | | 0,4 | 0,4 |
| **Y₂O₃** | | | | | | | | |
| **R₂O** | | | | | | | | |
| **ZnO** | 3 | 2 | | 1 | 1 | | 1,4 | 6,4 |
| **MgO** | 8,2 | 10 | 10 | 11,8 | 10 | 10,8 | 11,8 | 10,6 |
| **CaO** | 42,2 | 43 | 42 | 38,5 | 41 | 42,6 | 38,6 | 38 |
| **SrO** | | | | | | | | |
| **BaO** | | | | | | | | |
| **Summe** | 100 | 100 | 100 | 100 | 100 | 100 | 100 | 100 |
| | | | | | | | | |
| **Σ(RO)** | 53,4 | 55 | 52 | 51,3 | 52 | 53,4 | 51,8 | 55 |
| **CaO+MgO** | 50,4 | 53 | 52 | 50,3 | 51 | 53,4 | 50,4 | 48,6 |
| **Σ(R₂O₃+A₂O₅)** | 3,4 | 3,9 | 5 | 2,7 | 3,8 | 2,9 | 3,8 | 3,4 |
| **Σ(A₂O₅)** | 1,7 | 1.7 | 2 | 0,3 | 0,8 | 0,3 | 1 | 1 |
| **CaO/MgO** | 5,15 | 4,30 | 4,20 | 3,26 | 4,10 | 3,94 | 3,27 | 3,58 |

| **Temperaturen [°C]** | | | | | | | | |
|---|---|---|---|---|---|---|---|---|
| **EHM: Sintern** | 770 | 762 | 760 | 761 | | | 786 | |
| **EHM: Erweich.** | | | | | | | 904 | |
| **Sphär.** | 1308 | 1270 | 1313 | 1290 | | | 1309 | |
| **Halbkugel** | 1320 | 1279 | 1318 | 1300 | | | 1316 | |

| **Kristallisierbares Glas** | | | | | | | | |
|---|---|---|---|---|---|---|---|---|
| **α (20;300°C)** | 8,4 | 9,05 | 8,94 | 8,5 | 8,7 | 8,9 | 8,53 | 8,6 |
| **α (20;700°C)** | 9,4 | 10 | 10,04 | 9,53 | 9,62 | 9,84 | 9,57 | 9,8 |
| **T_{g}[°C]** | 749 | 749 | 747 | 746 | 754 | 757 | 747 | 726 |
| **Ew[°C]** | 880 | 875 | 880 | 878 | 891 | 900 | 884 | 862 |
| **Vₐ[°C]** | | | | | | | 1059 | |
| **Dichte[g/cm³]** | 3,26 | 3,28 | 3,35 | 3,23 | 3,29 | 3,2 | 3,29 | 3,37 |
| **tₖ100[°C]** | 616 | 598 | 590 | 606 | 607 | 609 | 609 | 607 |
| **E-Modul[GPa]** | 106 | 106 | 107 | 107 | | | | |

| **Kristallisiertes Glas** | | | | | | | | |
|---|---|---|---|---|---|---|---|---|
| Kristallisation erfolgte bei 1000°C/20 min | | | | | | | | |
| **α (20;700°C)** | 10,6 | 10,75 | | 10,55 | | 10,7 | 10,0 | 10,2 |
| **α (20;1000°C)** | 11,1 | 11.1 | | 11,1 | | 11 | 10,3 | 10,2 |
| | | | | | | | | |

| Kristallisation erfolgte bei 1020°C/20 min | | | | | | | | |
|---|---|---|---|---|---|---|---|---|
| **α (20;700°C)** | | | | | | | 10,15 | |
| **α (20;1000°C)** | | | | | | | 10,1 | |
| | | | | | | | | |

| Kristallisation erfolgte bei 1040°C/200 min | | | | | | | | |
|---|---|---|---|---|---|---|---|---|
| **α (20;700°C)** | 9,5 | 10 | 9,55 | | 10,3 | 10,4 | 9,4 | |
| **α (20;1000°C)** | 9.65 | 9,7 | 9,7 | | 10,1 | 10,3 | 9,6 | |

**Tabelle 1 (fortgesetzt)**

| **Bsp. Nr.** | **17** | **18** |
|---|---|---|
| **SiO₂** | 35,6 | 35,5 |
| **Al₂O₃** | 8 | 6 |
| **B₂O₃** | | |
| **TiO₂** | | |
| **MnO₂** | | |
| **ZrO₂** | | |
| **P₂O₅** | | |
| **Bi₂O₃** | | |
| **La₂O₃** | 3,2 | 3,6 |
| **Nb₂O₅** | 0,75 | 0,8 |
| **Ta₂O₅** | 0,45 | 0,3 |
| **Y₂O₃** | | |
| **R₂O** | | |
| **ZnO** | 2 | 4 |
| **MgO** | 12 | 12,8 |
| **CaO** | 38 | 37 |
| **SrO** | | |
| **BaO** | | |
| **Summe** | 100 | 100 |
| | | |
| **Σ(RO)** | 52 | 53,8 |
| **CaO+MgO** | 50 | 49,8 |
| **Σ(R₂O₃+A₂O₅)** | 4,4 | 4,7 |
| **Σ(A₂O₅)** | 1,2 | 1,1 |
| **CaO/MgO** | 3,178 | |

| **Temperaturen [°C]** | | |
|---|---|---|
| **EHM: Sintern** | 786 | |
| **EHM: Erweich.** | | |
| **Sphär.** | | |
| **Halbkugel** | 1319 | |

| **Kristallisierbares Glas** | | |
|---|---|---|
| **α (20;300°C)** | 8,5 | 8,69 |
| **α (20;700°C)** | 9,58 | 9,88 |
| **T_{g}[°C]** | 746 | 736 |
| **Ew[°C]** | 882 | 870 |
| **Dichte[g/cm³]** | 3,35 | 3,43 |
| **tₖ100[°C]** | | |
| **E-Modul[GPa]** | | |

| **Kristallisiertes Glas** | | |
|---|---|---|
| Kristallisation erfolgte bei 1000°C/20 min | | |
| **α (20;700°C)** | 9,3 | |

| Bsp. Nr. | 17 | **18** |
|---|---|---|
| a (20;1000°C) | 9,7 | |
| | | |

| Kristallisation erfolgte bei 1040°C/200 min | | |
|---|---|---|
| a (20;700°C) | 9,7 | 9,8 |
| **α (20;1000°C)** | 9,9 | 10,3 |

In der folgenden Tabelle 2 sind Vergleichsbeispiele von kristallisierbaren bzw. zumindest teilweise kristallisierten Gläsern aufgeführt.

**Tabelle 2 Zusammensetzungen von Vergleichsbeispielen**

| **Vergleichsbsp.** | **1** | **2** | **3** | **4** | **5** | **6** |
|---|---|---|---|---|---|---|
| **SiO₂** | 38,7 | 30 | 37 | 32 | 32 | 31,5 |
| **Al₂O₃** | 1,6 | 0,3 | 7 | 5 | 1,5 | 1,5 |
| **B₂O₃** | 8,9 | 1,2 | | | 8 | 8,5 |
| **TiO₂** | | | | | | |
| **MnO₂** | | | | | | |
| **ZrO₂** | 4 | | | | | 3 |
| **P₂O₅** | | 0,9 | | | | |
| **Bi₂O₃** | | 0,4 | | | | |
| **La₂O₃** | | | 2 | 5 | | |
| **Nb₂O₅** | | | | | | |
| **Ta₂O₅** | | | | 1 | | |
| **Y₂O₃** | 3,4 | 1,6 | 4 | | 4,5 | |
| **R₂O** | | | | | | |
| **ZnO** | | | | 2 | | |
| **MgO** | 6,7 | 19,3 | 10 | 11 | 33 | 34 |
| **CaO** | 36,7 | 46,3 | 40 | 44 | 21 | 21,5 |
| **SrO** | | | | | | |
| **BaO** | | | | | | |
| **Summe** | 100 | 100 | 100 | 100 | 100 | 100 |
| | | | | | | |
| **Σ(RO)** | 43,4 | 65,6 | 50 | 57 | 54 | 55,5 |
| **CaO+MgO** | 43,4 | 65,6 | 50 | 55 | 54 | 55,5 |
| **Σ(R₂O₃+A₂O₅)** | 3,4 | 2,9 | 6 | 6 | 4,5 | 0 |
| **Σ(A₂O₅)** | 0 | 0 | 0 | 1 | 0 | 0 |
| **CaO/MgO** | 5,48 | 2,40 | 4,0 | 4,0 | 0,64 | 0,63 |

| **Charakteristische Temperaturen [°C]** | | | | | | |
|---|---|---|---|---|---|---|
| **EHM: Sintern** | 753 | | | | 744 | 684 |
| **EHM: Erweich.** | 797 | | 1386 | | 784 | 778 |
| **Sphär.** | 898 | | | | 879 | 821 |
| **Halbkugel** | 1111* | | 1389 | | 1139* | 1126* |

| **Vergleichsbsp.** | **1** | **2** | **3** | **4** | **5** | **6** |
|---|---|---|---|---|---|---|
| **Kristallisierbares Glas** | | | | | | |
| **a(20;300°C)** | 8,36 | | 8,73 | | 8,81 | 9,51 |
| **α(20;700°C)** | | | | | | |
| **T_{g}[°C]** | 692 | | 783 | | 696 | 616 |
| **Ew[°C]** | | | | | | |
| **Dichte[g/cm³]** | | | | | | |
| **tₖ100[°C]** | | | | | | |
| **E-Modul[GPa]** | | | | | | |

| **Kristallisiertes Glas** | | | | | | |
|---|---|---|---|---|---|---|
| Kristallisation erfolgte bei 1000°C/20 min | | | | | | |
| **α (20;700°C)** | | | | | | |
| **α (20;1000°C)** | | | | | | |
| | | | | | | |

| Kristallisation erfolgte bei 1040°C/200 min | | | | | | |
|---|---|---|---|---|---|---|
| **α (20;700°C)** | | | | | | |
| **α (20;1000°C)** | | | | | | |

Bei den Vergleichsbeispielen 1, 5 und 6 kam es zum Fließen des Glases, und zwar bei einer Fließtemperatur von 1128°C (Vergleichsbeispiel 1), 1166°C (Vergleichsbeispiel 5) und 1147°C (Vergleichsbeispiel 6).

Bei den Vergleichsbeispielen 2, 3 und 4 konnte kein Glas mehr erhalten werden. Vielmehr kristallisierten diese Zusammensetzungen nach der Schmelze beim Abkühlen unkontrolliert aus.

Die Gläser gemäß Ausführungsformen der vorliegenden Offenbarung werden aus einem Schmelzprozess glasig erhalten. Beim Guss ist keine hohe Abkühlrate erforderlich. Es wurden u.a. Gussstücke von mindestens 30 cm³ hergestellt, also mit mehr als 100 g Gewicht. Dies ist umso überraschender, als in der Fachliteratur eine glasige Erstarrung nur für Ribbons und in kleinem Maßstab als möglich beschrieben ist.

Kristallisierte oder zumindest teilweise kristallisierte Gläser gemäß der vorliegenden Offenbarung weisen eine besonders vorteilhafte Formstabilität auf. Dies kann beispielhaft dadurch gezeigt werden, dass die Formabweichung zwischen einem Sinterling umfassend ein kristallisierbares Glas nach Ausführungsformen der vorliegenden Offenbarung und dem Formkörper umfassend ein zumindest teilweise kristallisiertes Glas, welcher durch eine Temperaturbehandlung zur Kristallisation aus dem Sinterling erhalten wird, nur sehr gering ausfällt, nämlich eine Längenabweichung lediglich im einstelligen Prozentbereich erhalten wird, wie beispielhaft die in der folgenden Tabelle aufgeführten Messdaten zeigen. Zur Bestimmung dieser Daten wurden Presslinge mit einer mittleren lateralen Abmessung, hier ein mittlerer Durchmesser, von ca. 10-12 mm hergestellt. Nach erfolgter Sinterung wurden die so erhaltenen Sinterlinge in einem Muffelofen mit einer Heizrate von 4K/Minute auf 1200°C aufgeheizt. Die Temperatur von 1200°C wurde 10 Minuten konstant gehalten. Anschließend erfolgte das Abkühlen. Nach erfolgter Abkühlung wurde die mittlere laterale Abmessung, hier der mittlere Durchmesser, erneut bestimmt. Anschließend erfolgte die Bestimmung der relativen Abweichung der mittleren lateralen Abmessung vor und nach Temperung bei 1200°C.

**Tabelle 3 Änderungen der mittleren lateralen Abmessung von Sinterlingen bei Kristallisation**

| **Beispiel Nr.** | **Mittlere laterale Abmessung [mm]** | | **Relative Abweichung [%]** |
|---|---|---|---|
| | **Vor Temperung** | **Nach Temperung** | |
| **1** | 11,02 | 11,09 | 0,64 |
| **2** | 11,33 | 11,44 | 0,97 |
| **3** | 11,06 | 11,79 | 6,60 |
| **4** | 10,98 | 10,97 | 0,03 |
| **5** | 10,95 | 11,31 | 3,32 |
| **6** | 10,88 | 11,38 | 4,66 |
| **7** | 10,81 | 11,00 | 1,76 |
| **8** | 10,75 | 10,79 | 0,40 |
| **9** | 11,07 | 11,16 | 0,87 |
| **10** | 10,79 | 10,83 | 0,36 |
| **11** | 10,75 | 11,25 | 4,65 |
| **12** | 10,98 | 11,30 | 2,85 |
| **13** | 10,93 | 11,39 | 4,27 |
| **14** | 10,69 | 10,76 | 0,59 |
| **15** | 10,81 | 11,16 | 3,24 |
| **Vergleichsbspl. 1** | 11,93 | zerlaufen | Nicht bestimmbar |
| **Vergleichsbspl. 5** | 11,26 | 14,8 | 31,45 |

Die aufgezeigte große Formstabilität von Formkörpern, wie Presslingen oder Sinterlingen, welche zunächst das kristallisierbare Glas umfassen und in einer Temperaturbehandlung zu Formkörpern umfassend zumindest teilweise ein zumindest teilweise kristallisiertes Glas umgewandelt werden, führt dazu, dass beispielsweise auch eine zuverlässige Kriechstreckenverlängerung in einer Durchführung nunmehr besonders vorteilhaft ausgeführt werden kann. Insbesondere verrunden Formkörper bei einer Temperaturbehandlung nicht. Die Beständigkeit gegenüber Harnstoff, insbesondere in einer Konzentration, wie diese in dem für SCR-Katalysatoren bestimmten AdBlue verwendet wird, sowie den daraus entstehenden Substanzen ist sehr gut, sodass hierdurch eine dauerbetriebsfeste Verwendung der hier beschriebenen Fügeverbindungen in Abgasanlagen mit Abgasreinigungssystemen ermöglicht wird.

### Figuren

Im Folgenden werden die vorliegend offenbarten Ausführungsformen anhand von Figuren weiter erläutert.

Es zeigen
- Fig. 1: eine Querschnittsansicht durch eine erste Ausführungsform der hier offenbarten Fügeverbindungen, bei welchem die Schnittebene entlang der Ebene AA aus Figur 1a in etwa durch die Mitte der Fügeverbindung verläuft,
- Fig. 1a: eine Aufsicht auf die in Figur 1 im Querschnitt dargestellte erste Ausführungsform,
- Fig. 2: eine Querschnittsansicht durch eine zweite Ausführungsform der hier offenbarten Fügeverbindungen, bei welchem die Schnittebene in etwa wie in Figur 1 und 1a dargestellt durch die Mitte dieser Fügeverbindung verläuft,
- Fig. 2a: eine Aufsicht auf eine Kriechstreckenverlängerung der ersten offenbarten Ausführungsform, auf welcher eine Spur eines Graphit- oder Bleistifts zu erkennen ist,
- Fig. 2b: eine Aufsicht auf eine Kriechstreckenverlängerung der ersten offenbarten Ausführungsform, auf welcher eine Spur eines Graphit- oder Bleistifts zu erkennen ist, nachdem diese mit einem Zellstofftuch durch eine seitliche Wischbewegung zumindest teilweise abgetragen wurde,
- Fig. 2c: eine Aufsicht auf eine Kriechstreckenverlängerung der ersten offenbarten Ausführungsform, auf welcher eine Spur eines Graphit- oder Bleistifts zu erkennen ist, nachdem diese mit einem Zellstofftuch durch eine seitliche Wischbewegung zumindest teilweise abgetragen wurde,
- Fig. 3: eine Querschnittsansicht durch eine dritte Ausführungsform der hier offenbarten Fügeverbindungen, bei welchem die Schnittebene in etwa wie in Figur 1 und 1a dargestellt durch die Mitte dieser Fügeverbindung verläuft,
- Fig. 4: eine Querschnittsansicht durch eine vierte Ausführungsform der hier offenbarten Fügeverbindungen, bei welchem die Schnittebene in etwa wie in Figur 1 und 1a dargestellt durch die Mitte der Fügeverbindung verläuft,
- Fig. 5: eine Querschnittsansicht durch eine fünfte Ausführungsform der hier offenbarten Fügeverbindungen, bei welchem die Schnittebene in etwa wie in Figur 1 und 1a dargestellt durch die Mitte der Fügeverbindung verläuft,
- Fig. 6: eine Querschnittsansicht durch eine sechste Ausführungsform der hier offenbarten Fügeverbindungen, bei welchem die Schnittebene in etwa durch die Mitte der Fügeverbindung verläuft,
- Fig. 7 bis 10: rastermikroskopische Aufnahmen von zumindest teilweise kristallisierten Gläsern nach Ausführungsformen der vorliegenden Offenbarung,
- Fig. 11: eine rastermikroskopische Aufnahme einer Fügeverbindung nach einer Ausführungsform der vorliegenden Offenbarung.

### Detaillierte Beschreibung bevorzugter Ausführungsformen

Bei der nachfolgenden detaillierten Beschreibung von hier offenbarten Ausführungsformen sind deren Bestandteile zum besseren Verständnis nicht maßstabsgerecht wiedergegeben und bezeichnen gleiche Bezugszeichen jeweils gleiche oder funktional sich entsprechende Bestandteile der jeweiligen Ausführungsformen.

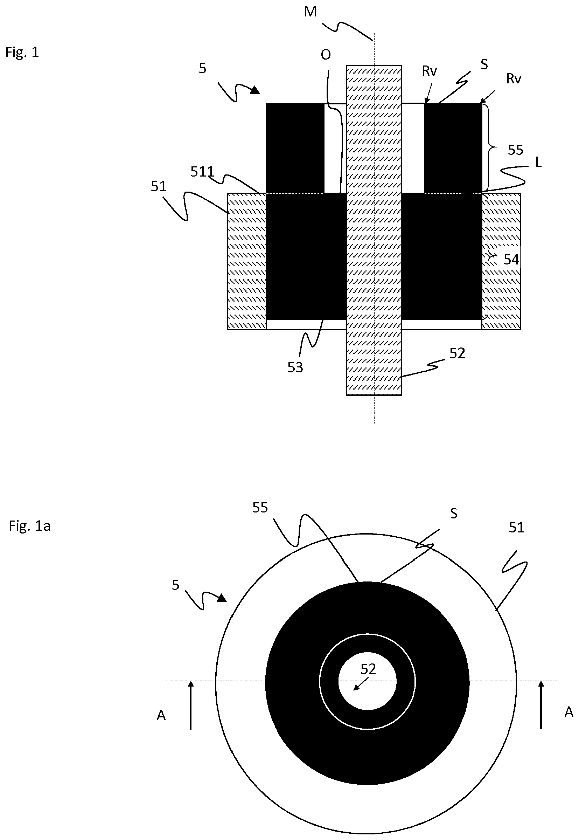

Figur 1 zeigt eine Querschnittsansicht durch eine erste Ausführungsform einer hier offenbarten Fügeverbindung 5, bei welchem die Schnittebene entlang der Ebene AA aus Figur 1a in etwa durch die Mitte der Fügeverbindung 5 verläuft, und die Mittellinie M einschließt.

Diese Fügeverbindung 5 umfasst ein elektrisch isolierendes Bauteil 53 sowie zumindest zwei Fügepartner 51, 52. Der Fügepartner 51 ist ohne Beschränkung der Allgemeinheit bei den vorliegend offenbarten Ausführungsformen hohlzylindrisch ausgebildet und umfasst ein Metall oder einen keramischen Werkstoff, wie dieses an nachfolgender Stelle noch detaillierter erläutert wird. Der Fügepartner 52 kann ebenfalls aus einem Metall bestehen, wie dieses nachfolgend noch detaillierter beschrieben wird und beispielsweise Teil einer elektrischen oder elektronischen Durchführung und somit bei dessen bestimmungsgemäßem Gebrauch Teil einer elektrischen oder elektronischen Verbindung sein.

Zumindest einer der Fügepartner 51, 52 ist von zumindest einem anderen der Fügepartner 51, 52 durch ein elektrisch isolierende Bauteil 53 elektrisch isoliert gehalten,

Dieses Bauteil 53 kann das vorliegend offenbarte kristallisierbare oder teilweise kristallisierte Glas umfassen oder aus diesem bestehen.

Das isolierende Bauteil 53 weist einen Abschnitt 54, welcher sich zwischen den Fügepartnern 51, 52 mit diese jeweils verbunden und vorzugsweise an diese jeweils angeglast erstreckt. Angeglast bedeutet hierbei im Rahmen der vorliegenden Offenbarung, dass die hier offenbarten kristallisierbaren oder teilweise kristallisierten Gläser bei deren thermischer Bearbeitung an deren Oberfläche eine amorphe oder glasige Schicht ausbilden, welche an dem Material des jeweiligen Fügepartners quasi anschmelzen kann und in diesem angeschmolzenen Zustand dann als angeglast bezeichnet werden.

Die obere Oberfläche O des isolierenden Elements ist in Figur 1 mit einer strichpunktierten Linie L gegenüber dem Abschnitt 54 abgegrenzt dargestellt, welches lediglich schematisch den Verlauf der oberen Oberfläche O ohne die Struktur S oder damit ohne Kriechstreckenverlängerung zum Vergleich gegenüber einer Fügeverbindung mit der Struktur S und somit mit Kriechstreckenverlängerung darstellt. Ohne die Struktur S würde die obere Oberfläche eine ebene Oberfläche ausbilden, an welcher gegebenenfalls Menisken zu den jeweiligen Fügepartnern ausgebildet wären.

Auf dieser Oberfläche des Abschnitts 54 des elektrisch isolierenden Bauteils 53, welcher sich zwischen den Fügepartnern erstreckt, ist jedoch bei den vorliegen offenbarten Ausführungsformen eine Struktur S, insbesondere im vorliegenden Fall eine Erhebung, welche durch den Abschnitt 55 gebildet wird, angeordnet.

Durch diesen Abschnitt 55, welcher die Struktur S ausbildet, kann eine Strecke auf der Oberfläche des isolierenden Bauteils 53 vom inneren Fügepartner 52 zum äußeren Fügepartner 51 verlängert werden und zusammen mit der Struktur S, somit der Kriechstreckenverlängerung um bis zum siebenfachen oder sogar darüber hinaus gehend länger werden.

Hierdurch können niederohmige Ablagerungen auf der jeweiligen Oberfläche nur in sehr viel schwächerem Maß dazu beitragen, dass der elektrische Widerstand zwischen den Fügepartnern 51 und 52 vermindert wird.

Bei Tröfpchen- und/oder einen Oberflächenfilm-bildenden Ablagerungen kann es sehr vorteilhaft sein, wenn die Struktur S Kanten aufweist, welche einen Verrundungsradius Rv von weniger als einem Zehntel Millimeter, vorzugsweise von weniger als einem Zwanzigstel Millimeter und mehr als 10 µm aufweisen. In diesem Fall kommt es regelmäßig, häufig auch unter dem Einfluss der Schwerkraft dazu, dass sich ein Oberflächenfilm oder ein Belag mit Tröpfchen nicht über diese Kante mit dem Verrundungsradius Rv erstreckt und hierdurch keine geschlossene Oberflächenbelegung entstehen kann.

Alternativ zu der bei den vorliegenden Ausführungsformen dargestellten Erhöhung kann die Struktur S auch eine Absenkung ausbilden, welche dann in das isolierende Bauteil 53 heineinragt. In jedem Fall wird jedoch insbesondere der direkte Weg von dem zumindest einen Fügepartner zu dem zumindest einen anderen Fügepartner entlang der Oberfläche gegenüber einer Oberfläche ohne diese Struktur S verlängert. Hierbei wird als direkter Weg jeweils der kürzeste Weg entlang der Oberfläche zum einen ohne die Struktur S und zum anderen erfindungsgemäß mit der Struktur S von einem Fügepartner zum jeweils anderen Fügepartner verstanden.

Vorzugsweise umgibt die Struktur S zumindest einen Fügepartner, vorliegend den Fügepartner 52 als ringförmiges Gebilde vollständig, wie dies beispielhaft auch gut aus Figur 1a zu erkennen ist. Im Sinne vorliegenden Offenbarung bedeutet die Aussage "vollständig umgeben" nicht dass hierbei ein vollständiges dreidimensionales Umgeben vorliegen muss, obwohl es diese prinzipiell auch der Fall sein kann. Ein vollständiges Umgeben liegt im Rahmen der vorliegenden Offenbarung bereits dann vor, wenn hierbei ein vollständiges ringförmiges Umgeben verwirklicht wird, insbesondere so, dass hierbei durch dieses Umgeben bereits eine vollständige Abdichtung bereitgestellt werden kann.

Die Struktur S kann einstückig und materialidentisch mit dem Abschnitt 54 des isolierenden Bauteils 53, welcher sich zwischen den Fügepartnern 51, 52 mit diesem jeweils verbunden und vorzugsweise an diese jeweils angeglast erstreckt, ausgebildet sein.

Vorzugsweise umfasst das Material des isolierenden Bauteils 53 dabei ein zumindest teilweise kristallisiertes Glas, wie dieses im Rahmen der vorliegenden Offenbarung an anderem Ort noch detaillierter beschrieben wird.

In diesem Fall kann das isolierende Bauteil 53 zusammen mit der Struktur S in einem einzigen thermischen Bearbeitungsablauf gemeinsam ausgebildet und insbesondere deren Kristallisationsgrad eingestellt werden.

In vorteilhafter Weise wird durch das vorliegend offenbarte kristallisierbare Glas während der thermischen Bearbeitung, insbesondere während des Anglasens im Übergangsbereich zwischen der Oberfläche des Fügepartners und der Oberfläche des zumindest teilweise kristallisierten Glases eine zumindest überwiegend amorphe Glasschicht ausgebildet, welche nachfolgend an diesem Ort dauerbetriebsfest angeordnet ist, die bevorzugt weniger als 10 Poren pro cm³ umfasst und/oder bevorzugt eine Dicke von 5 µm oder weniger, besonders bevorzugt von 2 µm oder weniger und ganz besonders bevorzugt 1 µm oder weniger aufweist. Hierdurch kommt es zu einer hermetischen Verbindung zwischen den Fügepartnern 51, 52 und dem isolierenden Bauteil 53.

Bei einer bevorzugten Ausführungsform umfasst die Struktur kristallisierbares oder zumindest teilweise kristallisiertes Glas und ist an der Oberfläche der Struktur eine zumindest überwiegend amorphe Grenzschicht, insbesondere Glasschicht ausgebildet, welche im Wesentlichen keine offenen Poren aufweist und insbesondere weniger als 10 Poren /cm³ umfasst, die eine Dicke von 5 µm oder weniger, bevorzugt von 2 µm oder weniger und ganz besonders bevorzugt von 1 µm oder weniger aufweist.

In dieser zumindest vorwiegend amorphen Grenzschicht, welche je nach Ausführungsform eine Dicke von 5 µm oder weniger, bevorzugt von 2 µm oder weniger und ganz besonders bevorzugt von 1 µm oder weniger aufweist, ist der Anteil der amorphen oder glasigen Phase, jeweils gemessen in Gewichtsprozent höher als der Anteil aller jeweiligen kristallinen Phasen zusammen, ebenfalls gemessen in Gewichtsprozent.

Es ist aber durchaus möglich, dass zumindest ein Teil der Glasmatrix-bildenden Oxide, beispielsweise La₂O₃, im weiteren Verlauf der Keramisierung zumindest teilweise in Kristallphasen eingebaut werden können. Jedoch verbleibt normalerweise ein wenn auch geringer Restgehalt an glasiger Phase, welcher insbesondere durch die Glasmatrix-bildenden Oxide gebildet wird und die vorstehend erwähnten amorphen Grenzschichten ausbildet.

Um zu erkennen, ob eine hier offenbarte Ausführungsform vorliegt, haben die Erfinder einen Test entwickelt.

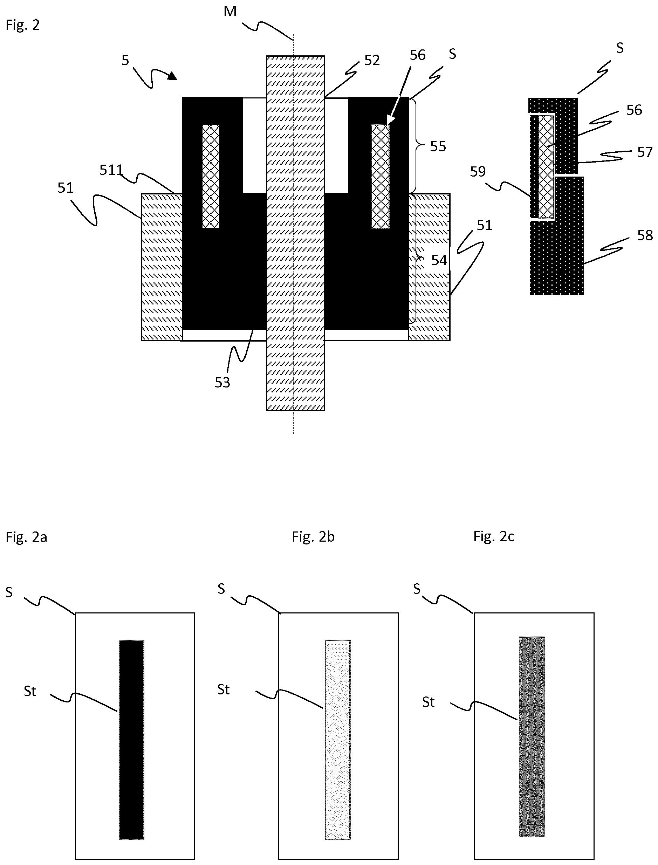

Schreibt man mit einem Stift auf der Oberfläche der Struktur S oder der Oberfläche O, beispielsweise einen Strich St, wie dieser in den Figuren 2a bis 2c dargestellt ist, beispielsweise mit einem Graphitstift der Härte HB, der senkrecht zur Oberfläche der Struktur S geführt und mit etwa 100 mN angedrückt wird, so entsteht dieser Strich St jeweils wie in Figur 2a dargestellt.

Wischt man parallel zur Oberfläche der Struktur S oder der Oberfläche O mit einem Zellstofftuch, beispielsweise der Marke Zewa, und einem Anpressdruck von ebenfalls ca. 100 mN, so entstehet bei den hier offenbarten Bauteilen, welche kristallisierbares Glas oder teilweise kristallisiertes Glas umfassen, ein sehr starker Abtrag, da sich das Graphit des Graphit- oder Bleistifts nicht in Poren der ansonsten glatten Oberfläche halten kann. Hierbei wird in typischer Weise der Kontrast zwischen dem Strich St und der Oberfläche der Struktur S oder der Oberfläche O stark vermindert, beispielhaft auf einen Wert von weniger als 50 %. oder je nach Angabe des Kontrastes von weniger als 0,5.

Wischt man nun jedoch parallel zur Oberfläche der Struktur S oder der Oberfläche O mit einem Zellstofftuch, beispielsweise der Marke Zewa, und einem Anpressdruck von ebenfalls ca. 100 mN, so entstehet bei beispielsweise aus Zirkonoxid bestehenden Bauteilen nur ein geringer Abtrag, da sich das Graphit des Graphit- oder Bleistifts in Poren der Oberfläche der Keramik halten kann. Hierbei wird in typischer Weise der Kontrast zwischen dem Strich St und der Oberfläche der Struktur S oder der Oberfläche O nur wenig vermindert, beispielhaft auf einen Wert von mehr als 50 % oder e nach Angabe des Kontrastes von mehr als 0,5.

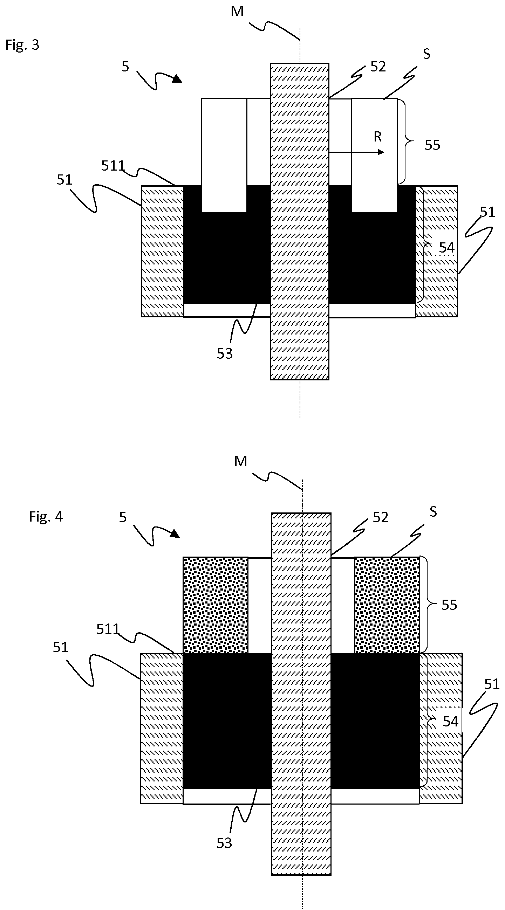

Bei weiteren Ausführungsformen, wie dies lediglich beispielhaft in den Figuren 3 und 4 gezeigt ist, ist die Struktur nicht materialidentisch mit dem Abschnitt 54 des isolierenden Bauteils 53 ist, welcher sich zwischen den Fügepartnern 51, 52 mit diesem jeweils verbunden und vorzugsweise an diese jeweils angeglast erstreckt, Die Struktur S kann dabei dann eine hochtemperaturstabile keramische Verbindung, beispielsweise Forsterite, eine Aluminiumoxid-basierte Keramik oder eine Zirkoniumoxid-basierte Keramik, beispielsweise eine Keramik umfassend Y-stabilisiertes Zirkoniumoxid, umfassen oder aus dieser bestehen. Wenn die Struktur S nicht aus erfindungsgemäßen Material ausgebildet ist, so ist auch eine positive Durchführbarkeit des Bleistifttests nicht gegeben.

Figur 2 zeigt eine Querschnittsansicht durch eine zweite Ausführungsform der hier offenbarten Fügeverbindungen, bei welchem die Schnittebene in etwa wie in Figur 1 und 1a dargestellt durch die Mitte dieser Fügeverbindung verläuft.

Bei dieser Ausführungsform umfasst die Struktur S eine Verstärkung 56, welche eine Metallfolie, ein Metallblech oder ein Metall umfassendes Gelege, Geflecht oder Gestrick enthält oder aus diesem besteht, wobei das Metall vorzugsweise aus einem Stahl besteht oder Stahl umfasst. Diese im Wesentlichen ringförmige Verstärkung 56 ist vorzugsweise in weiteren isolierenden Bauteilen 57, 58, 59 gehalten, welche als Sinterlinge ausgebildet die Verstärkung 56 aufnehmen können und nach der thermischen Behandlung an dieser angegelast sein können. Das Material der im Wesentlichen ringförmigen Bauteile 57, 58 und 59 kann dabei aus dem vorliegend offenbarten kristallisierbaren Glas bestehen.

Fig. 3 zeigt eine Querschnittsansicht durch eine dritte Ausführungsform der hier offenbarten Fügeverbindungen, bei welchem die Schnittebene in etwa wie in Figur 1 und 1a dargestellt durch die Mitte dieser Fügeverbindung verläuft,

Bei dieser Ausführungsform ist die Struktur S nicht materialidentisch mit dem Abschnitt 54 des isolierenden Bauteils 53, welcher sich zwischen den Fügepartnern 51, 52 mit diesem jeweils verbunden und vorzugsweise an diese jeweils angeglast erstreckt. Die Struktur S umfass eine hochtemperaturstabiles keramisches Material, beispielsweise Forsterite, eine Aluminiumoxid-basierte Keramik oder eine Zirkoniumoxid-basierte Keramik, beispielsweise eine Keramik umfassend Y-stabilisiertes Zirkoniumoxid,oder besteht aus dieser.

Wie aus Figur 3 gut zu erkennen ist, ragt die Struktur S in das isolierende Bauteil 53 hinein und wird von diesem so umgeben, dass während der thermischen Bearbeitung vorzugsweise eine Anglasung am hineinragenden Bereich der Struktur S stattfindet. Dabei ist die Struktur S in etwa mittig in radialer Richtung an dem Abschnitt 54 des isolierenden Bauteils 53 und vorzugsweise zumindest abschnittsweise in diesen hineinragend angeordnet. Diese radiale Richtung ist in Figur 3 mit einem Pfeil R dargestellt.

Fig. 4 zeigt eine Querschnittsansicht durch eine vierte Ausführungsform der hier offenbarten Fügeverbindungen, bei welchem die Schnittebene in etwa wie in Figur 1 und 1a dargestellt durch die Mitte der Fügeverbindung verläuft.

Diese weitere schematische und nicht maßstabsgetreue Abbildung der Fügeverbindung 5 unterscheidet sich von den in den Fig. 1 bis 8 dargestellten Fügeverbindungen 5 durch die Ausgestaltung der Struktur S, welche die Kriechstreckenverlängerung 55 ausbildet. Diese umfasst neben dem Material des Abschnitts 54 ein Zweitmaterial. Dieses Zweitmaterial ist ebenfalls ein isolierendes Material, unterscheidet sich allerdings von dem Material des Abschnitts 54. Das Material des Abschnitts 54 ist bei dieser Ausführungsform als kristallisierbares bzw. als zumindest teilweise kristallisiertes Glas ausgebildet, wie dieses an späterem Ort noch detaillierter beschrieben wird, wobei das Zweitmaterial eine andere chemische und/oder kristallographische Zusammensetzung aufweist. D.h. das Zweitmaterial unterscheidet sich von dem Material des Abschnitts 54 dadurch, dass dieses eine abweichende chemische Zusammensetzung aufweist und/oder dass dieses einen abweichenden Kristallgehalt aufweist. Insbesondere kann das Zweitmaterial aus ZrO₂ ausgebildet sein oder dieses umfassen. Es hat sich gezeigt, dass besonders form- und temperaturstabile Strukturen S als Kriechstreckenverlängerungen möglich sind, wenn als Zweitmaterial zwischen 5 Gew.-% und 25 Gew.-% eines Zweitmaterials, bevorzugt ZrO₂, zugesetzt werden. Ein Gehalt von 10 - 15 Gew.-% ist besonders bevorzugt.

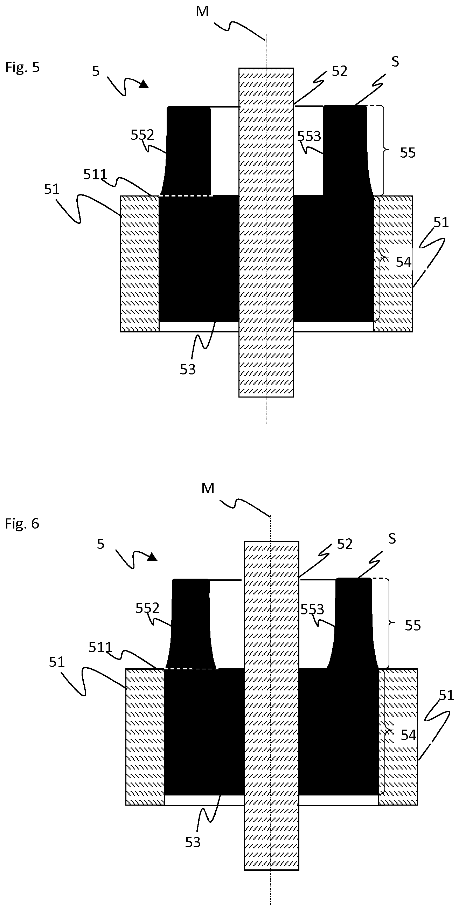

Fig. 5 zeigt eine Ausgestaltung einer Fügeverbindung 5 nach einer fünften Ausführungsform in stark schematisierter Weise. Die äußere Seitenwand 552 des Abschnitts 55 weist dabei eine leicht gebogene oder gekrümmte Form auf, ist also nicht vollkommen eben ausgebildet. Demgegenüber ist hier die innere Seitenwand 553 des Abschnitts 55 eben ausgebildet. Wie man Fig. 5 entnehmen kann, weicht die Planität der Seitenwand 552 von der Planität der Seitenwand 553 ab. Dabei ist hier die Seitenwand 552 etwas verzerrt dargestellt, da in der Realität eine solch starke Abweichung von einer ebenen Ausführung der Seitenwände nicht vorkommt.

Fig. 6 zeigt den Fall einer Fügeverbindung 5 nach einer weiteren, sechsten Ausführungsform, bei welcher sowohl die innere als auch die äußere Seitenwand 552 und 553 jeweils nicht perfekt plan bzw. eben ausgebildet sind. Die Planität ist hier vorliegend aber bei beiden Seitenwänden 552 und 553 nahezu gleich ausgebildet. Auch hier ist es wieder zu einer starken Verzerrung gekommen, um den Effekt einer nicht vollständig planen Seitenwand darstellen zu können. In der Regel werden wesentlich geringere Abweichungen von einer planen Seitenwand erzielt.

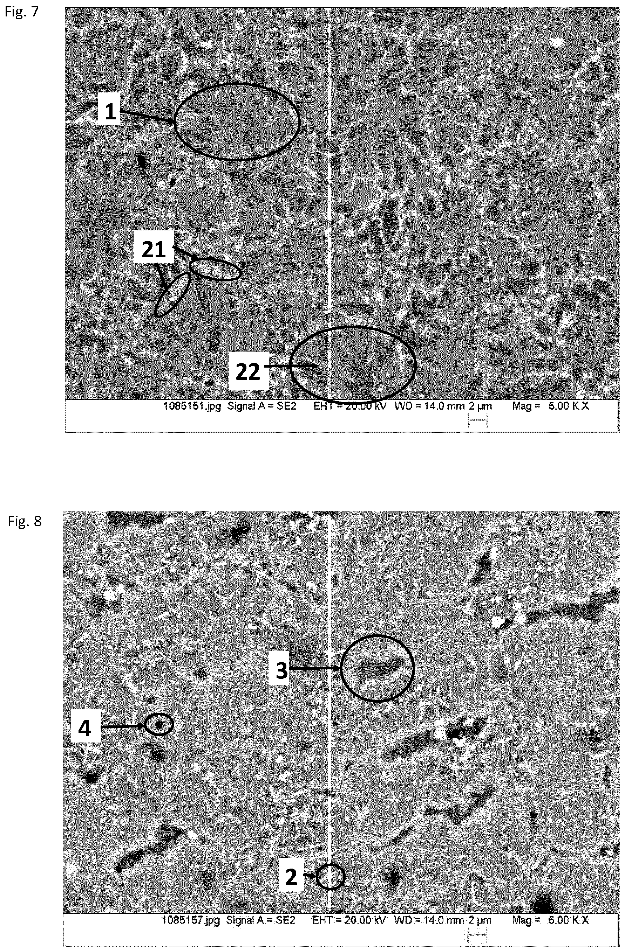

Fig. 7 zeigt eine erste rastermikrospkopische Aufnahme eines zumindest teilweise kristallisierten Glases nach einer Ausführungsform der Offenbarung. Das zumindest teilweise kristallisierte Glas umfasst Kristallaggregate 1, welche aus einer Vielzahl von Kristalliten gebildet sind, wobei diese Kristallite vorzugsweise nadelförmig ausgebildet sind. In der Fig. 1 wurde hierbei ein Kristallaggregat 1 beispielhaft als solches bezeichnet. Weiterhin sind Kristallite 21 an Korngrenzen erkennbar und wurden beispielhaft bezeichnet, ebenso wie nadelig ausgebildete Kristallite 22.

Fig. 8 zeigt eine zweite rastermikroskopische Aufnahme eines zumindest teilweise kristallisierten Glases nach einer weiteren Ausführungsform der Offenbarung. Auch hier umfasst das zumindest teilweise kristallisierte Glas Kristallaggregate, gebildet aus einer Vielzahl von Kristalliten, welche vorzugsweise nadelförmig ausgebildet sind. Weiterhin sind zwischen den einzelnen Kristalliten teilweise Poren angeordnet und das zumindest teilweise kristallisierte Glas umfasst weiterhin zwischen den Kristalliten angeordnet noch eine Restglasphase. Bezeichnet sind hier beispielhaft die Kristallite 2, welche hier ein sternförmig ausgebildetes Kristallaggregat bilden. Ebenso erkennbar ist die Restglasphase 3, welche in der rastermikroskopischen Darstellung eine graue Farbe hat, sowie die beispielhaft bezeichnete Pore 4 (mit schwarzer Farbe).

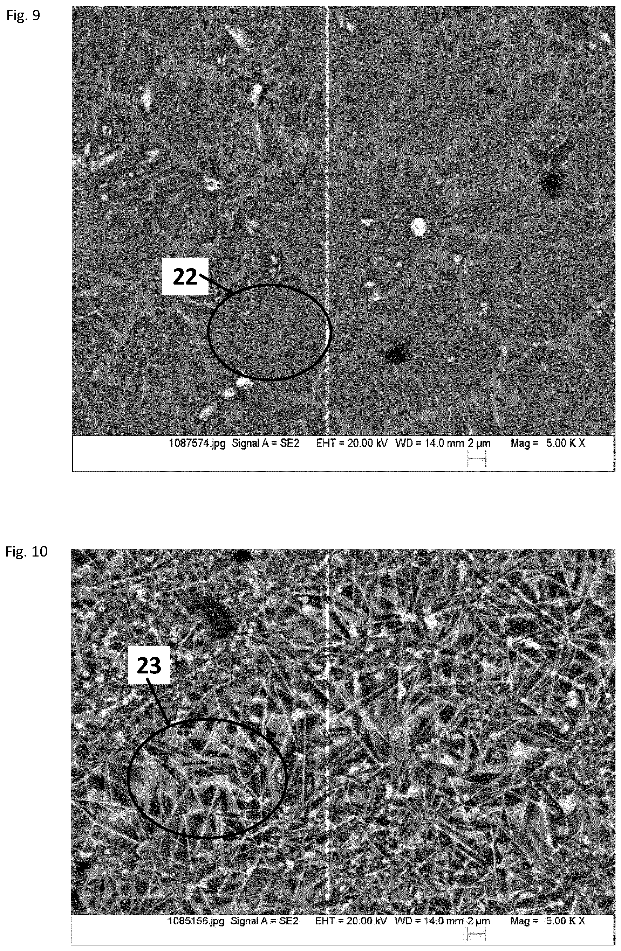

Fig. 9 ist eine dritte rastermikroskopische Aufnahme eines zumindest teilweise kristallisierten Glases nach einer nochmals weiteren Ausführungsform der Offenbarung. Auch hier sind die Kristallaggregate erkennbar. Die Kristallite sind hier so fein ausgebildet, dass sie bei der gewählten Auflösung als solche kaum erkennbar sind. Auf diese Weise wird eine sehr dichte, feine Struktur erzielt. Beispielhaft kann hier auf die bezeichneten, sehr feinen Kristalle 22 verwiesen werden.

Fig. 10 ist eine nochmals weitere Rastermikroskopaufnahme eines nochmals weiteren zumindest teilweise kristallisierten Glases nach einer Ausführungsform der Offenbarung. Die von den Kristallaggregaten des zumindest teilweise kristallisierten Glases umfassten Kristallite 23 sind hier im Gegensatz zu den Kristalliten des in Fig. 9 gezeigten zumindest teilweise kristallisierten Glases nicht so fein ausgebildet, sondern vielmehr ist ihre stabartige oder möglicherweise plättchenförmige Form erkennbar. Die Kristallite 23 sind hier gegeneinander verzahnt angeordnet, ähnlich wie eine "Kartenhausstruktur".

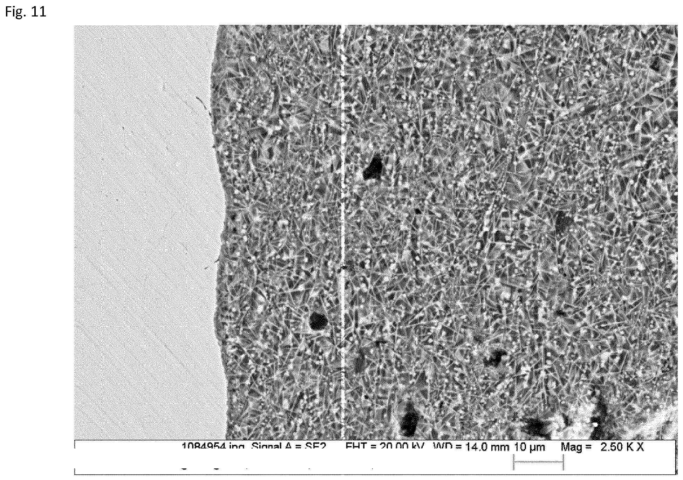

Fig. 11 zeigt eine rastermikroskopische Aufnahme einer Fügeverbindung nach einer Ausführungsform der Offenbarung. An der Grenzfläche des der Aufnahme links angeordneten Fügepartners zum zumindest teilweise kristallisierten Glas ist eine sehr dünne Grenzschicht ausgebildet, welche weniger als 10 Poren /cm³ umfasst. Es handelt sich um eine zumindest überwiegend amorphe Glasschicht angeordnet, die eine Dicke von 5 µm oder weniger, bevorzugt von 2 µm oder weniger und ganz besonders bevorzugt von 1 µm oder weniger aufweist.

Die nachfolgenden Feststellungen werden für sämtliche der vorstehend offenbarten Ausführungsformen getroffen.

Die vorstehend beschriebenen Ausführungsformen wurden lediglich bezüglich zweier Fügepartner beschrieben. Es liegt jedoch im Umfang der vorliegenden Offenbarung, dass auch drei oder mehr Fügepartner, analog wie hier offenbart miteinander in einer Fügeverbindung durch das isolierende Bauteil gehalten sein können.

Es ist mit den vorliegend offenbarten Fügeverbindungen eine vielfache Verlängerung der Kriechstrecke möglich, wobei ein Faktor von mehr als 7 an Verlängerung realisiert wurde.

Vorteilhaft ist auch die Kombination aus Wasserfestigkeit in Elektrokorrosions-anfälligen Umgebungen sowie die hohe Formstabilität der hier offenbarten Fügeverbindungen.

Der ausreichend hohe elektrische Widerstand ermöglicht die Verwendung des kristallisierbaren Glases als Kriechstreckenverlängerung auch unter Kondensation von Wasser (allgemein) oder sogar von Kühlmittel (z.B. als Durchführung in einem E-Compressor),

Ein Vorteil gegenüber Keramik ist die Geschlossenporigkeit der Struktur S, somit des Überstandmaterials.

Dauerbetriebsfeste Anwendungen umfassen dabei die Durchführung der Strom- oder Leistungsversorgung für Heizelemente (vorrangig zur Verwendung beispielsweise in heizbaren Katalysatorelementen, Sensoren im Abgasstrang sowie generell als Durchführung für elektrische Kompressoren, vorrangig in automotiven Anwendungen.

Bei den vorstehend offenbarten Ausführungsformen können die Kristallite zumindest teilweise an den Korngrenzen Kristallisationskeime umfassen und/oder wobei an den Korngrenzen der Kristallite zumindest teilweise Anreicherungen umfassend Lanthan, insbesondere umfassend Lanthanverbindungen, angeordnet sind.

Im Betriebszustand die Kristallaggregate der hier offenbarten kristallisierbaren oder teilweise kristallisierten Gläser dem Verschieben von Volumenelementen des zumindest teilweise kristallisierten Glases gegeneinander entgegenwirken.

Bei den vorliegen offenbarten Fügeverbindungen ist die Oberfläche des zumindest teilweise kristallisierten Glases meniskusfrei.

Bei den vorliegend offenbarten Fügeverbindung kann der Fügepartner ein Metall umfassen, insbesondere ein Metall aus der Gruppe der Stähle, beispielsweise der Normalstähle, Edelstähle, nichtrostende Stähle und der hochtemperaturstabilen ferritische Stähle, welche auch bekannt sind unter dem Markennamen Thermax, beispielsweise Thermax 4016, Thermax4742, oder Thermax4762 oder Crofer22 APU oder CroFer22 H oder NiFe-basierte Materialien, beispielsweise NiFe45, NiFe47 oder vernickelte Pins, oder bekannt unter dem Markennamen Inconel, beispielsweise Inconel 718 oder X-750, oder Stähle, beispielsweise bekannt unter den Bezeichnungen CF25, Alloy 600, Alloy 601, Alloy 625, Alloy 690, SUS310S, SUS430, SUH446 oder SUS316, oder austenitische Stähle wie 1.4762, 1.4828 oder 1.4841, Kanthal-Heizdraht oder eine hochtemperaturstabile keramische Verbindung, beispielsweise Forsterite, eine Aluminiumoxid-basierte Keramik oder eine Zirkoniumoxid-basierte Keramik, beispielsweise eine Keramik umfassend Y-stabilisiertes Zirkoniumoxid, umfasst.

Die vorliegend offenbarten Fügeverbindungen weisen eine Helium-Leckrate von kleiner als 10⁻⁸ mbar * I/s auf und/oder umfassen ein zumindest teilweise kristallisiertes Glas, welches einen E-Modul zwischen 80 GPa und 200 GPa aufweist, vorzugsweise einen E-Modul zwischen 100 GPa und 125 GPa.

Bei dem vorliegend offenbarten kristallisierbarem oder zumindest teilweise kristallisierten Glas kann der Gehalt des kristallisierbaren oder zumindest teilweise kristallisierten Glases an CaO zwischen mindestens 35 Mol-% und höchstens 46 Mol-% betragen, vorzugsweise zwischen mindestens 35 Mol-% und weniger als 43,5 Mol-%, und / oder der Gehalt des kristallisierbaren oder zumindest teilweise kristallisierten Glases an MgO zwischen 5 Mol-% und weniger als 13 Mol-% betragen.

Bei dem vorliegend offenbarten kristallisierbarem oder zumindest teilweise kristallisierten Glas kann das Glas als zumindest teilweise kristallisiertes Glas vorliegen und einen linearen thermischen Ausdehnungskoeffizienten im Temperaturbereich von 20°C bis 700°C von mehr als 9 * 10⁻⁶/K, vorzugsweise von mehr als 10 * 10⁻⁶/K, aufweisen, und wobei besonders vorzugsweise der lineare thermische Ausdehnungskoeffizient des zumindest teilweise kristallisierten Glases im Temperaturbereich von 20°C bis 1000°C mehr als 9 * 10 ⁻⁶/K, bevorzugt mehr als 9,5 * 10⁻⁶/K beträgt.

Bei dem vorliegend offenbarten kristallisierbarem oder zumindest teilweise kristallisierten Glas kann das Glas als kristallisierbares Glas vorliegend eine Transformationstemperatur T_{g} von mehr als 720°C aufweisen.

Bei dem vorliegend offenbarten kristallisierbarem oder zumindest teilweise kristallisierten Glas beträgt die Temperatur des kristallisierbaren Glases für den spezifischen elektrischen Widerstand von 10⁸ Ω * cm, vorzugsweise bestimmt nach DIN 52326, tₖ 100, 500°C oder mehr.

Bei dem vorliegend offenbarten kristallisierbarem oder zumindest teilweise kristallisierten Glas kann das zumindest teilweise kristallisierte Glas Kristallite von Calcium-Magnesium-Silikaten, vorzugsweise von CaO-reichen Calcium-Magnesium-Silikaten, insbesondere von CaO-reichen Calcium-Magnesium-Inselsilikaten und / oder -Gruppensilikaten, umfassen, wie Merwinit und / oder einen Mischkristall mit Merwinitstruktur, und alternativ oder zusätzlich eine Kristallphase mit Melilithstruktur, wie Äkermanit Ca₂MgSi₂O₇ und / oder Gehlenit Ca₂Al[AlSiO₇] und / oder Mischkristalle hiervon, und / oder eine Kristallphase mit Augit-Struktur.

### Bezugszeichenliste

- 1: Kristallaggregat
- 2: Kristallit
- 21: Kristallite an Korngrenzen
- 22: nadelig ausgebildete Kristallite
- 23: stab- oder plättchenförmig ausgebildete Kristallite
- 3: Restglas
- 4: Pore
- 5: Fügeverbindung
- 51: erster Fügepartner
- 511: Oberkante des ersten Fügepartners
- 52: zweiter Fügepartner
- 521: Oberkante des zweiten Fügepartners
- 53: isolierendes Bauteil
- 54: zwischen den Fügepartnern angeordneter Teil des isolierenden Bauteils
- 55: Fügepartner 51 überragender Abschnitt des isolierenden Bauteils, Kriechstreckenverlängerung
- 56: Verstärkung
- 57: im Wesentlichen ringförmiges Bauteil
- 58: im Wesentlichen ringförmiges Bauteil
- 59: im Wesentlichen ringförmiges Bauteil
- M: Mittellinie
- S: Struktur, welche die Kriechstreckenverlängerung ausbildet
- O: obere Oberfläche des isolierenden Bauteils 53
- Rv: Verrundungsradius an der Kante
- St: mit einem Stift auf der Oberfläche der Struktur S oder der Oberfläche O geschriebener Strich
- R: radiale Richtung

## Patentansprüche

1. Kristallisierbares oder zumindest teilweise kristallisiertes Glas, umfassend
| | |
|---|---|
| La₂O₃ | größer 0,3 Mol-% bis kleiner 5 Mol-%, vorzugsweise kleiner oder gleich |
| 4,5 Mol-%, | besonders bevorzugt kleiner oder gleich 4 Mol-%, |
| Nb₂O₅ | 0 Mol-% bis 9 Mol-%, |
| Ta₂O₅ | 0 Mol-% bis 7 Mol-%, |
wobei Σ(A₂O₅) größer 0,2 Mol-% bis 9 Mol-%, wobei A ein Element ist, welches in Oxiden üblicherweise die Oxidationszahl V+ aufweist, und insbesondere Nb, Ta oder P und / oder Mischungen hiervon umfasst, wobei das kristallisierbares oder zumindest teilweise kristallisiertes Glas ein Oxid RO umfasst und wobei gilt
| | |
|---|---|
| Σ(RO) | ≤ 55 Mol-%, |
wobei R ein Element ist, welches in Oxiden üblicherweise die Oxidationszahl II+ aufweist,
sowie umfassend
| | |
|---|---|
| SiO₂ | 30 Mol-% bis 40 Mol-%, |
| Al₂O₃ | 3 Mol-% bis 12 Mol-%, |
| CaO | 32 Mol-% bis 46 Mol-%, |
| MgO | 5 Mol-% bis 15 Mol-%, |
| ZnO | 0 Mol-% bis 10 Mol-%.. |

2. Kristallisierbares oder zumindest teilweise kristallisiertes Glas nach Anspruch 1,
wobei R Ca, Mg oder Zn und / oder Mischungen hiervon umfasst.

3. Kristallisierbares oder zumindest teilweise kristallisiertes Glas nach einem der Ansprüche 1
oder 2, umfassend
| | |
|---|---|
| ZrO₂ | 0 Mol-% bis 4 Mol-%, vorzugsweise höchstens 3 Mol-%, und/oder |
| TiO₂ | 0 Mol-% bis 4 Mol-%, vorzugsweise höchstens 3 Mol-%, und/oder |
| MnO₂ | 0 Mol-% bis 5 Mol-%. |

4. Kristallisierbares oder zumindest teilweise kristallisiertes Glas nach einem der Ansprüche 1 bis 3, wobei
- der Gehalt des kristallisierbaren oder zumindest teilweise kristallisierten Glases an CaO zwischen mindestens 35 Mol-% und höchstens 46 Mol-% beträgt, vorzugsweise zwischen mindestens 35 Mol-% und weniger als 43,5 Mol-%, und / oder
- der Gehalt des kristallisierbaren oder zumindest teilweise kristallisierten Glases an MgO zwischen 5 Mol-% und weniger als 13 Mol-% beträgt und/oder
- das Glas als kristallisierbares Glas vorliegt und eine Transformationstemperatur T_{g} von mehr als 720°C aufweist und/oder
- der lineare thermische Ausdehnungskoeffizient des kristallisierbaren Glases in einem Temperaturbereich von 20°C bis 300°C mehr als 8 * 10⁻⁶/K sowie vorzugsweise in einem Temperaturbereich von 20°C bis 700°C mehr als 9 * 10⁻⁶/K beträgt und/oder
- das Glas als zumindest teilweise kristalliertes Glas vorliegt und einen linearen thermischen Ausdehnungskoeffizienten im Temperaturbereich von 20°C bis 700°C von mehr als 9 * 10⁻⁶/K, vorzugsweise von mehr als 10 * 10⁻⁶/K, aufweist, und wobei besonders vorzugsweise der lineare thermische Ausdehnungskoeffizient des zumindest teilweise kristallisierten Glases im Temperaturbereich von 20°C bis 1000°C mehr als 9 * 10 ⁻⁶/K, bevorzugt mehr als 9,5 * 10⁻⁶/K beträgt.

5. Kristallisierbares oder zumindest teilweise kristallisiertes Glas nach einem der Ansprüche bis 4,
wobei die Temperatur des kristallisierbaren Glases für den spezifischen elektrischen Widerstand von 10⁸ Ω * cm, vorzugsweise bestimmt nach DIN 52326, tₖ 100, 500°C oder mehr beträgt und/oder
wobei das zumindest teilweise kristallisierte Glas Kristallite von Calcium-Magnesium-Silikaten, vorzugsweise von CaO-reichen Calcium-Magnesium-Silikaten, insbesondere von CaO-reichen Calcium-Magnesium-Inselsilikaten und / oder -Gruppensilikaten, umfasst, wie Merwinit und / oder einen Mischkristall mit Merwinitstruktur, und alternativ oder zusätzlich eine Kristallphase mit Melilithstruktur, wie Åkermanit Ca₂MgSi₂O₇ und / oder Gehlenit Ca₂Al[AISiO₇] und / oder Mischkristalle hiervon, und / oder eine Kristallphase mit Augit-Struktur.

6. Erzeugnis, insbesondere Halteelement und/oder Isolationselement und/oder additive Struktur, umfassend
ein zumindest teilweise kristallisiertes Glas nach Anspruch 1,
vorzugsweise herstellbar aus einem Sinterkörper umfassend ein zumindest teilweise kristallisierbares Glas nach Anspruch 1, wobei der Sinterkörper bevorzugt das kristallisierbare Glas als Glaspulver umfasst, wobei besonders bevorzugt das Glaspulver Pulverkörner mit Kornoberflächen umfasst.

7. Erzeugnis nach Anspruch 6 in Form einer Fügeverbindung, insbesondere temperaturstabile und/oder mechanisch hochbelastbare Fügeverbindung, umfassend
das zumindest teilweise kristallisiertes Glas und einen Fügepartner.

8. Fügeverbindung nach Anspruch 7,
wobei die Kristallite zumindest teilweise an den Korngrenzen Kristallisationskeime umfassen und/oder
wobei an den Korngrenzen der Kristallite zumindest teilweise Anreicherungen umfassend Lanthan, insbesondere umfassend Lanthanverbindungen, angeordnet sind.

9. Fügeverbindung nach einem der vorstehenden Ansprüche 7 oder 8, aufweisend wenigstens eines der folgenden Merkmale:
- der Betrag der Differenz der thermischen Ausdehnungskoeffizienten von Fügepartner und zumindest teilweise kristallisiertem Glas beträgt 5*10⁻⁶/K oder weniger, vorzugsweise 3*10-⁶/K oder weniger und besonders bevorzugt 1*10⁻⁶/K oder weniger,
- die Fügeverbindung hält Betriebstemperaturen von zumindest 1000 °C stand, und insbesondere ist die Fügeverbindung rüttel- und vibrationsstabil, gemessen nach ISO 16750-3,
- im Betriebszustand wirken die Kristallaggregate dem Verschieben von Volumenelementen des zumindest teilweise kristallisierten Glases gegeneinander entgegen,
- die Oberfläche des zumindest teilweise kristallisierten Glases ist meniskusfrei.
- im Übergangsbereich zwischen der Oberfläche des Fügepartners und der Oberfläche des zumindest teilweise kristallisierten Glases ist eine zumindest überwiegend amorphe Glasschicht angeordnet, die bevorzugt weniger als 10 Poren pro cm³ umfasst und/oder bevorzugt eine Dicke von 5 µm oder weniger, besonders bevorzugt von 2 µm oder weniger und ganz besonders bevorzugt 1 µm oder weniger aufweist,
- der Fügepartner umfasst ein Metall, insbesondere ein Metall aus der Gruppe der Stähle, beispielsweise der Normalstähle, Edelstähle, nichtrostende Stähle und der hochtemperaturstabilen ferritische Stähle, welche auch bekannt sind unter dem Markennamen Thermax, beispielsweise Thermax 4016, Thermax4742, oder Thermax4762 oder Crofer22 APU oder CroFer22 H oder NiFe-basierte Materialien, beispielsweise NiFe45, NiFe47 oder vernickelte Pins, oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitische Stähle wie 1.4828 oder 1.4841 oder eine hochtemperaturstabile keramische Verbindung, beispielsweise eine Aluminiumoxid-basierte Keramik oder eine Zirkoniumoxid-basierte Keramik, beispielsweise eine Keramik umfassend Y-stabilisiertes Zirkoniumoxid,
- die Fügeverbindung weist eine Helium-Leckrate von kleiner als 10⁻⁸ mbar * l/s auf
und/oder
umfasst ein zumindest teilweise kristallisiertes Glas, welches einen E-Modul zwischen 80 GPa und 200 GPa aufweist, vorzugsweise einen E-Modul zwischen 100 GPa und 125 GPa.

10. Fügeverbindung (5) nach einem der Ansprüche 7 bis 9, umfassend ein elektrisch isolierendes Bauteil (53) sowie zumindest zwei Fügepartner (51, 52),
wobei zumindest einer der Fügepartner (51, 52) von zumindest einem anderen der Fügepartner (51, 52) durch das elektrisch isolierende Bauteil (53) elektrisch isoliert gehalten ist,
und die Oberfläche des elektrisch isolierenden Bauteils (53), welche sich zwischen den Fügepartnern erstreckt,
eine Struktur (S), insbesondere eine Erhebung oder Absenkung ausbildet,
durch welche insbesondere der direkte Weg von dem zumindest einen Fügepartner zu dem zumindest einen anderen Fügepartner entlang der Oberfläche gegenüber einer Oberfläche ohne diese Struktur (S) verlängert ist und
wobei die Struktur (S) vorzugsweise mindestens einen Fügepartner vollständig umgibt,
wobei das isolierende Bauteil (53) und/oder die Struktur (S) das kristallisierbare oder zumindest teilweise kristallisierte Glas umfasst oder aus diesem besteht.

11. Fügeverbindung nach Anspruch 10, aufweisend wenigstens eines der folgenden Merkmale:
- die Struktur (S) ist einstückig und materialidentisch mit dem Abschnitt (54) des isolierenden Bauteils (53), welcher sich zwischen den Fügepartnern (51, 52) mit diesem jeweils verbunden und vorzugsweise an diese jeweils angeglast erstreckt, wobei vorzugsweise das Material des isolierenden Bauteils (53) ein zumindest teilweise kristallisiertes Glas umfasst,
- im Übergangsbereich zwischen der Oberfläche des Fügepartners und der Oberfläche des zumindest teilweise kristallisierten Glases ist eine zumindest überwiegend amorphe Glasschicht angeordnet, die bevorzugt weniger als 10 Poren pro cm³ umfasst und/oder bevorzugt eine Dicke von 5 µm oder weniger, besonders bevorzugt von 2 µm oder weniger und ganz besonders bevorzugt 1 µm oder weniger aufweist,
- die Struktur (S) umfasst kristallisierbares oder zumindest teilweise kristallisiertes Glas und an der Oberfläche der Struktur (S) ist eine zumindest überwiegend amorphe Grenzschicht, insbesondere als Glasschicht ausgebildet, welche im Wesentlichen keine offenen Poren aufweist und insbesondere weniger als 10 Poren /cm³ umfasst, die eine Dicke von 5 µm oder weniger, bevorzugt von 2 µm oder weniger und ganz besonders bevorzugt von 1 µm oder weniger aufweist.

12. Fügeverbindung nach Anspruch 10, bei welcher die Struktur (S) nicht materialidentisch mit dem Abschnitt (54) des isolierenden Bauteils (53) ist, welcher sich zwischen den Fügepartnern (51, 52) mit diesem jeweils verbunden und vorzugsweise an diese jeweils angeglast erstreckt,
vorzugsweise aufweisend eines der folgenden Merkmale:
- die Struktur (S) ist nicht materialidentisch mit dem Abschnitt (54) des isolierenden Bauteils (53), welcher sich zwischen den Fügepartnern (51, 52) mit diesem jeweils verbunden und vorzugsweise an diese jeweils angeglast erstreckt und eine hochtemperaturstabiles keramisches Material, beispielsweise Forsterit, eine Aluminiumoxid-basierte Keramik oder eine Zirkoniumoxid-basierte Keramik, beispielsweise eine Keramik umfassend Y-stabilisiertes Zirkoniumoxid, umfasst,
- die Struktur (S) ist nicht materialidentisch mit dem Abschnitt (54) des isolierenden Bauteils (53), welcher sich zwischen den Fügepartnern (51, 52) mit diesem jeweils verbunden und vorzugsweise an diesen jeweils angeglast erstreckt, und die Struktur (S) ist in etwa mittig in radialer Richtung an dem Abschnitt (54) des isolierenden Bauteils (53) und vorzugsweise zumindest abschnittsweise in diesen hineinragend angeordnet.

13. Fügeverbindung nach Anspruch einem der Ansprüche 10 bis 12, aufweisend wenigstens eines der folgenden Merkmale:
- die Struktur (S) umfasst eine Verstärkung (56) und die Verstärkung (56) eine Metallfolie, ein Metallblech oder ein Metall umfassendes Gelege, Geflecht oder Gestrick, wobei das Metall vorzugsweise aus einem ferrittischen Stahl besteht oder Stahl umfasst,
- die Struktur (S) weist Kanten auf, welche einen Verrundungsradius Rv von weniger als einem Zehntel Millimeter, vorzugsweise von weniger als einem Zwanzigstel Millimeter und mehr als 10 µm aufweisen.

14. Fügeverbindung nach einem der vorstehenden Ansprüche 7 bis 13, umfassend
das zumindest teilweise kristallisiertes Glas und einen Fügepartner,
wobei das zumindest teilweise kristallisierte Glas einen Restglasanteil von weniger als 10 %, vorzugsweise von weniger als 5 %, bezogen auf das Volumen, umfasst,
wobei das zumindest teilweise kristallisierte Glas Kristallaggregate umfasst,
wobei die Kristallaggregate gebildet sind aus einer Vielzahl von Kristalliten,
wobei die Kristallite vorzugsweise nadelig und/oder plättchenförmig ausgebildet sind,
wobei die Kristallite insbesondere bevorzugt radialstrahlig, wie sphärolithisch und/oder fächerförmig, und/oder stabförmig und/oder plättchenförmig das zumindest teilweise kristallisierte Glas durchsetzend angeordnet sind und umfassend insbesondere ein oder das isolierende Bauteil (53).

15. Verwendung einer Fügeverbindung nach einem der Ansprüche 7 bis 14 oder eines Erzeugnisses nach Anspruch 6 in einem Sensor, wie einem Abgassensor, einem Drucksensor, einem Partikelsensor, wie beispielsweise einem Rußpartikelsensor und/oder einem Temperatursensor und/oder in einem NOₓ-Sensor und/oder in einem Sauerstoffsensor, und/oder in einer Durchführung für einen Kompressor und/oder einen e-Kompressor und/oder als elektrische Stromdurchführung in einem Abgaselement und/oder in einer Brennstoffzelle und/oder in einer Durchführung für einen chemischen Reaktor.

## Claims

1. A crystallisable or at least partially crystallised glass, comprising
| | |
|---|---|
| La₂O₃ | more than 0.3 mol% to less than 5 mol%, preferably less than or equal to 4.5 mol%, most preferably less than or equal to 4 mol%; |
| Nb₂O₅ | 0 mol% to 9 mol%; |
| Ta₂O₅ | 0 mol% to 7 mol%; |
with
| | |
|---|---|
| Σ (A₂O₅) | more than 0.2 mol% to 9 mol%, |
where A is an element which usually has the oxidation number V+ in oxides, and
which in particular comprises Nb, Ta, or P and/or mixtures thereof;
wherein the crystallisable or at least partially crystallised glass comprises an oxide RO, with
| | |
|---|---|
| Σ (RO) | ≤ 55 mol%, |
where R is an element which, in oxides, usually has the oxidation number II+;
and comprising
| | |
|---|---|
| SiO₂ | 30 mol% to 40 mol%; |
| Al₂O₃ | 3 mol% to 12 mol%; |
| CaO | 32 mol% to 46 mol%; |
| MgO | 5 mol% to 15 mol%; |
| ZnO | 0 mol% to 10 mol%. |

2. The crystallisable or at least partially crystallised glass according to claim 1, wherein R comprises Ca, Mg, or Zn, and/or mixtures thereof.

3. The crystallisable or at least partially crystallised glass according to any one of claims 1 or 2, comprising
| | |
|---|---|
| ZrO₂ | 0 mol% to 4 mol%, preferably at most 3 mol%; and/or |
| TiO₂ | 0 mol% to 4 mol%, preferably at most 3 mol%; and/or |
| MnO₂ | 0 mol% to 5 mol%. |

4. The crystallisable or at least partially crystallised glass according to any one of claims 1 to 3, wherein
- the CaO content of the crystallisable or at least partially crystallised glass is between at least 35 mol% and at most 46 mol%, preferably between at least 35 mol% and less than 43.5 mol%; and/or
- the MgO content of the crystallisable or at least partially crystallised glass is between 5 mol% and less than 13 mol%; and/or
- the glass is provided in the form of a crystallisable glass and has a transition temperature T_{g} of more than 720 °C; and/or
- the crystallisable glass has a coefficient of linear thermal expansion of more than 8 * 10⁻⁶/K in a temperature range from 20 °C to 300 °C, and preferably of more than 9 * 10⁻⁶/K in a temperature range from 20 °C to 700 °C; and/or
- the glass is provided in the form of an at least partially crystallised glass and has a coefficient of linear thermal expansion of more than 9 * 10⁻⁶/K, preferably more than 10 * 10⁻⁶/K in the temperature range from 20 °C to 700 °C, and wherein, most preferably, the coefficient of linear thermal expansion of the at least partially crystallised glass is greater than 9 * 10⁻⁶/K, preferably greater than 9.5 * 10⁻⁶/K in the temperature range from 20 °C to 1000 °C.

5. The crystallisable or at least partially crystallised glass according to any one of claims 1 to 4,
wherein the crystallisable glass exhibits a temperature, t_{K100}, for electrical resistivity of 10⁸ Ω·cm, preferably determined according to DIN 52326, of 500 °C or more; and/or
wherein the at least partially crystallised glass includes crystallites of calcium-magnesium silicates, preferably of CaO-rich calcium-magnesium silicates, in particular of CaO-rich calcium-magnesium island silicates and/or group silicates, such as merwinite and/or a solid solution with a merwinite structure, and alternatively or additionally a crystal phase with a melilite structure, such as åkermanite Ca₂MgSi₂O₇ and/or gehlenite Ca₂Al[AlSiO₇] and/or solid solutions thereof, and/or a crystal phase with an augite structure.

6. A product, in particular a retaining component and/or insulating component and/or additive structure, comprising
an at least partially crystallised glass according to claim 1;
preferably producible from a sintered body comprising an at least partially crystallisable glass according to claim 1, wherein the sintered body preferably comprises the crystallisable glass in the form of a glass powder, wherein, particularly preferably, the glass powder comprising powder grains having grain surfaces.

7. The product according to claim 6 in the form of a joint connection, in particular a heat resistant and/or mechanically highly resilient joint connection, comprising
the at least partially crystallised glass and a joining partner.

8. The joint connection according to claim 7,
wherein the crystallites at least partially comprise crystallisation nuclei at the grain boundaries; and/or
wherein the grain boundaries of the crystallites, at least in part, have enrichments in lanthanum arranged thereon, in particular comprising lanthanum compounds.

9. The joint connection according to any one of claims 7 or 8, exhibiting at least one of the following features:
- the difference, as an absolute value, between thermal expansion coefficients of the joining partner and the at least partially crystallised glass is 5 * 10⁻⁶/K or less, preferably 3 * 10⁻⁶/K or less, and most preferably 1 * 10⁻⁶/K or less;
- the joint connection withstands operating temperatures of at least 1000 °C, and the joint connection in particular is shock-resistant and vibration-resistant, measured according to ISO 16750-3;
- during operation, the crystal aggregates counteract a displacement of volume elements of the at least partially crystallised glass relative to one another;
- the surface of the at least partially crystallised glass exhibits no meniscus;
- an at least predominantly amorphous glass layer is provided in the transition zone between the surface of the joining partner and the surface of the at least partially crystallised glass, which glass layer preferably includes less than 10 pores per cm³ and/or preferably has a thickness of 5 µm or less, more preferably of 2 µm or less, and most preferably of 1 µm or less;
- the joining partner comprises a metal, in particular a metal from the group of steels, such as normal steels, high-grade steels, stainless steels, and heat resistant ferritic steels, also known under the brand name Thermax, e.g. Thermax 4016, Thermax 4742, or Thermax 4762, or Crofer 22 APU, or CroFer 22 H, or NiFe-based materials, e.g. NiFe45, NiFe47, or nickel-plated pins, or known under the brand name Inconel, e.g. Inconel 718 or X-750, or steels such as known under the designations CF25, Alloy 600, Alloy 625, Alloy 690, SUS310S, SUS430, SUH446, or SUS316, or austenitic steels such as 1.4828 or 1.4841, or a heat-resistant ceramic compound such as an aluminium oxide-based ceramic or a zirconium oxide-based ceramic, for example a ceramic comprising Y-stabilized zirconium oxide;
- the joint connection exhibits a helium leak rate of less than 10⁻⁸ mbar * l/s;
and/or
- comprises an at least partially crystallised glass which has a Young's modulus between 80 GPa and 200 GPa, preferably a Young's modulus between 100 GPa and 125 GPa.

10. The joint connection according to any one of claims 7 or 9, comprising an electrically insulating component (53) and at least two joining partners (51, 52),
wherein at least one of the joining partners (51, 52) is kept electrically insulated from at least one further of the joining partners (51, 52) by the electrically insulating component (53);
and wherein the surface of the electrically insulating component (53) extending between the joining partners defines a structure (S), in particular an elevation or depression
which elongates in particular a direct path along the surface from the at least one joining partner to the at least one further joining partner compared to a surface without said structure (S); and
wherein said structure (S) preferably completely surrounds at least one joining partner;
wherein the insulating component (53) or the structure (S) comprises or is made of the crystallisable or at least partially crystallised glass.

11. The joint connection according to claim 10, exhibiting at least one of the following features:
- the structure (S) is made integral with and of the same material as the portion (54) of the insulating component (53) that extends between the joining partners (51, 52) and is bonded to each of the joining partners and preferably glass-fused thereto, wherein, preferably, the material of the insulating component (53) comprises an at least partially crystallised glass;
- an at least predominantly amorphous glass layer is provided in the transition zone between the surface of the joining partner and the surface of the at least partially crystallised glass, which glass layer preferably comprises less than 10 pores per cm³ and/or which preferably has a thickness of 5 µm or less, more preferably 2 µm or less, and most preferably 1 µm or less;
- the structure (S) comprises crystallisable or at least partially crystallised glass, and an at least predominantly amorphous boundary layer is provided on the surface of the structure (S), in particular in the form of a glass layer which is substantially free of open pores and in particular includes less than 10 pores per cm³, and which has a thickness of 5 µm or less, preferably 2 µm or less, and most preferably 1 µm or less.

12. The joint connection according to claim 10, wherein the structure (S) is not made of the same material as said portion (54) of the insulating component (53) that extends between the joining partners (51, 52) and is bonded to each of the joining partners and preferably glass-fused thereto,
preferably exhibiting at least one of the following features:
- the structure (S) is not made of the same material as the portion (54) of the insulating component (53) that extends between the joining partners (51, 52) and is bonded to each of the joining partners and preferably glass-fused thereto, and comprises a heat-resistant ceramic material such as forsterite, an aluminium oxide-based ceramic, or a zirconium oxide-based ceramic, for example a ceramic comprising Y-stabilized zirconium oxide;
- the structure (S) is not made of the same material as the portion (54) of the insulating component (53) that extends between the joining partners (51, 52) and is bonded to each of the joining partners and preferably glass-fused thereto, and the structure (S) is disposed on the portion (54) of the insulating component (53) so as to be approximately radially centered thereto and preferably protruding into it, at least partially.

13. The joint connection according to any one of claims 10 to 12, exhibiting at least one of the following features:
- the structure (S) comprises a reinforcement (56), and the reinforcement (56) comprises a metal foil, or a sheet metal, or a metallic laid scrim, mesh, or knitted fabric, said metal preferably consisting of a ferritic steel or comprising steel;
- the structure (S) has edges having a rounding radius Rv of less than one tenth of a millimetre, preferably less than one twentieth of a millimetre, and of more than 10 µm.

14. The joint connection according to any one of claims 7 to 13, comprising
at least partially crystallised glass and a joining partner;
wherein the at least partially crystallised glass includes a residual glass fraction of less than 10 %, preferably less than 5 %, based on the volume;
wherein the at least partially crystallised glass includes crystal aggregates;
wherein said crystal aggregates are formed by a large number of crystallites;
wherein the crystallites are preferably needle-shaped and/or platelet-shaped;
wherein the crystallites are particularly preferably arranged in a radiating pattern such as a spherulitic and/or fan-shaped pattern and/or are rod-shaped and/or platelet-shaped and distributed throughout the at least partially crystallised glass, and comprising in particular one or the insulating component (53).

15. Use of a joint connection according to any one of claims 7 to 14 or of a product according to claim 6 in a sensor such as an exhaust gas sensor, a pressure sensor, a particle sensor, e.g. a soot particle sensor, and/or a temperature sensor, and/or in an NOₓ sensor, and/or in an oxygen sensor, and/or in a feedthrough of a compressor and/or an e-compressor, and/or as an electrical power feedthrough of an exhaust gas component, and/or in a fuel cell, and/or in a feedthrough of a chemical reactor.

## Revendications

1. Verre cristallisable ou au moins en partie cristallisé, comprenant
La₂O₃ en une quantité supérieure à 0,3 % en mol et inférieure à 5 % en mol, de préférence inférieure ou égale à 4,5 % en mol, de manière particulièrement préférée inférieure ou égale à 4 % en mol,
Nb₂O₅ en une quantité de 0 % en mol à 9 % en mol,
Ta₂O₅ en une quantité de 0 % en mol à 7 % en mol,
dans lequel
Σ(A₂O₅ ) est supérieur à 0,2 % en mol à 9 % en mol,
dans lequel A est un élément qui présente habituellement dans les oxydes le nombre d'oxydation V+, et comprend en particulier Nb, Ta ou P et/ou des mélanges de ceux-ci, dans lequel le verre cristallisable ou au moins en partie cristallisé comprend un oxyde RO et dans lequel s'applique Σ (RO) ≤ 55 % en mol,
dans lequel R est un élément qui présente habituellement dans les oxydes le nombre d'oxydation II+, et comprenant également
SiO₂ en une quantité de 30 % à 40 % en mol,
Al₂O₃ en une quantité de 3 % en mol à 12 % en mol,
CaO en une quantité de 32 % en mol à 46 % en mol,
MgO en une quantité de 5 % en mol à 15 % en mol,
ZnO en une quantité de 0 % en mol à 10 % en mol.

2. Verre cristallisable ou au moins en partie cristallisé selon la revendication 1, dans lequel R comprend Ca, Mg ou Zn et/ou des mélanges de ceux-ci.

3. Verre cristallisable ou au moins en partie cristallisé selon l'une quelconque des revendications 1 ou 2, comprenant
ZrO₂ en une quantité de 0 % en mol à 4 % en mol, de préférence de 3 % en mol au maximum, et/ou
TiO₂ en une quantité de 0 % mol à 4 % en mol, de préférence de 3 % en mol au maximum, et/ou
MnO₂ en une quantité de 0 % en mol à 5 % en mol.

4. Verre cristallisable ou au moins en partie cristallisé selon l'une quelconque des revendications 1 à 3, dans lequel
- la teneur en CaO du verre cristallisable ou au moins en partie cristallisé est comprise entre au moins 35 % en mol et au maximum 46 % en mol, de préférence entre au moins 35 % en mol et moins de 43,5 % en mol, et/ou
- la teneur en MgO du verre cristallisable ou au moins en partie cristallisé est comprise entre 5 % en mol et moins de 13 % en mol et/ou
- le verre est présent en tant que verre cristallisable et présente une température de transformation T_{g} supérieure à 720 °C et/ou
- le coefficient de dilatation thermique linéaire du verre cristallisable est supérieur à 8 * 10⁻⁶/K dans une plage de température de 20 °C à 300 °C et de préférence est supérieur à 9 * 10⁻⁶/K dans une plage de température de 20 °C à 700 °C et/ou
- le verre est présent en tant que verre au moins en partie cristallisé et présente un coefficient de dilatation thermique linéaire dans la plage de température de 20 °C à 700 °C supérieur à 9*10⁻⁶/K, de préférence supérieur à 10 * 10⁻⁶/K, et dans lequel, en particulier de préférence, le coefficient de dilatation thermique linéaire du verre au moins en partie cristallisé dans la plage de température de 20 °C à 1000 °C est supérieur à 9 * 10⁻⁶/K, de manière préférée est supérieur à 9,5 * 10⁻⁶/K.

5. Verre cristallisable ou au moins en partie cristallisé selon l'une quelconque des revendications 1 à 4,
dans lequel la température du verre cristallisable pour la résistance électrique spécifique de 10⁸ Ω * cm, de préférence déterminée selon la norme DIN 52326, tₖ 100, est de 500 °C ou plus et/ou
dans lequel le verre au moins en partie cristallisé comprend des cristallites de silicates de calcium-magnésium, de préférence des silicates de calcium-magnésium riches en CaO, en particulier des silicates d'îlots de calcium-magnésium et/ou des silicates de groupes de calcium-magnésium riches en CaO, tels que la merwinite et/ou un cristal mixte avec une structure de merwinite, et en variante ou en supplément une phase cristalline avec une structure de mélilite, tels que l'akermanite Ca₂MgSi₂O₇ et/ou le gehlénite Ca₂Al[AlSiO₇] et/ou des cristaux mixtes de ceux-ci, et/ou une phase cristalline avec une structure d'augite.

6. Produit, en particulier élément de maintien et/ou élément d'isolation et/ou structure additive, comprenant un verre au moins en partie cristallisé selon la revendication 1,
pouvant être fabriqué de préférence à partir d'un corps fritté comprenant un verre au moins en partie cristallisable selon la revendication 1, dans lequel le corps fritté comprend de manière préférée le verre cristallisable sous forme de poudre de verre, dans lequel de manière particulièrement préférée la poudre de verre comprend des grains de poudre avec des surfaces granulaires.

7. Produit selon la revendication 6 sous la forme d'un assemblage, en particulier assemblage stable à la température et/ou hautement résistant mécaniquement, comprenant le verre au moins en partie cristallisé et un partenaire d'assemblage.

8. Assemblage selon la revendication 7,
dans lequel les cristallites comprennent au moins en partie des germes de cristallisation sur les limites de grain
et/ou
dans lequel des enrichissements comprenant du lanthane, en particulier comprenant des composés de lanthane, sont disposés au moins en partie sur les limites de grain des cristallites.

9. Assemblage selon l'une quelconque des revendications 7 ou 8 précédentes, présentant au moins une quelconque des caractéristiques suivantes :
- la valeur de la différence des coefficients de dilatation thermique entre le partenaire d'assemblage et le verre au moins en partie cristallisé est de 5*10⁻⁶/K ou moins, de préférence de 3*10⁻⁶/K ou moins, et de manière particulièrement préférée de 1*10⁻⁶/K ou moins,
- l'assemblage résiste à des températures de fonctionnement d'au moins 1000 °C et, en particulier, l'assemblage est stable face aux chocs et aux vibrations, selon une mesure réalisée selon la norme ISO 16750-3,
- dans l'état de fonctionnement, les agrégats cristallins s'opposent au déplacement d'éléments volumiques du verre au moins en partie cristallisé,
- la surface du verre au moins en partie cristallisé est exempte de ménisques.
- dans la zone de transition entre la surface du partenaire d'assemblage et la surface du verre au moins en partie cristallisé, une couche de verre au moins majoritairement amorphe est disposée, qui comprend de préférence moins de 10 pores par cm³ et/ou présente de préférence une épaisseur de 5 µm ou moins, de manière particulièrement préférée de 2 µm ou moins et de manière très particulièrement préférée de 1 µm ou moins,
- le partenaire d'assemblage comprend un métal, en particulier un métal du groupe des aciers, par exemple des aciers normaux, des aciers nobles, des aciers inoxydables et des aciers ferritiques résistants aux hautes températures, également connus sous la marque Thermax, par exemple Thermax 4016, Thermax4742, ou Thermax4762 ou Crofer22 APU ou CroFer22 H ou des matériaux à base de NiFe, par exemple NiFe45, NiFe47 ou broches nickelées, ou connus sous la marque Inconel, par exemple Inconel 718 ou X-750, ou des aciers, par exemple connus sous les désignations CF25, Alloy 600, Alliage 625, Alliage 690, SUS310S, SUS430, SUH446 ou SUS316, ou des aciers austénitiques tels que 1.4828 ou 1.4841 ou un composé céramique stable à haute température, par exemple une céramique à base d'oxyde d'aluminium ou une céramique à base d'oxyde de zirconium, par exemple une céramique comprenant de l'oxyde de zirconium stabilisé en Y,
- l'assemblage présente un taux de fuite d'hélium inférieur à 10⁻⁸ mbar * l/s et/ou
comprend un verre au moins en partie cristallisé qui présente un module E compris entre 80 GPa et 200 GPa, de préférence un module E compris entre 100 GPa et 125 GPa.

10. Assemblage (5) selon l'une quelconque des revendications 7 à 9, comprenant un composant électriquement isolant (53) ainsi qu'au moins deux partenaires d'assemblage (51, 52),
dans lequel au moins un des partenaires d'assemblage (51, 52) est maintenu par au moins un autre des partenaires d'assemblage (51, 52) de manière électriquement isolée par le composant électriquement isolant (53),
et la surface du composant électriquement isolant (53), qui s'étend entre les partenaires d'assemblage,
forme une structure (S), en particulier une surélévation ou un abaissement,
par laquelle/lequel, en particulier, le chemin direct de l'au moins un partenaire d'assemblage à l'au moins un autre partenaire d'assemblage est prolongé le long de la surface par rapport à une surface sans cette structure (S) et
dans lequel la structure (S) entoure de préférence complètement au moins un partenaire d'assemblage,
dans lequel le composant isolant (53) et/ou la structure (S) comprennent le verre cristallisable ou au moins en partie cristallisé ou en sont constitués.

11. Assemblage selon la revendication 10, présentant au moins une quelconque des caractéristiques suivantes :
- la structure (S) est monobloc et identique en matériau à la section (54) du composant isolant (53), laquelle est respectivement reliée à celui-ci entre les partenaires d'assemblage (51, 52) et s'étend de préférence sur ceux-ci de manière respectivement vitrée, dans lequel de préférence le matériau du composant isolant (53) comprend un verre au moins en partie cristallisé,
- dans la zone de transition entre la surface du partenaire d'assemblage et la surface du verre au moins en partie cristallisé, une couche de verre au moins majoritairement amorphe est disposée, qui comprend de préférence moins de 10 pores par cm³ et/ou présente de préférence une épaisseur de 5 µm ou moins, de manière particulièrement préférée de 2 µm ou moins et de manière très particulièrement préférée de 1 µm ou moins,
- la structure (S) comprend du verre cristallisable ou au moins en partie cristallisé et sur la surface de la structure (S) est formée une couche limite au moins majoritairement amorphe, en particulier en tant que couche de verre, qui ne présente sensiblement pas de pores ouverts et comprend en particulier moins de 10 pores/cm³, qui présente une épaisseur de 5 µm ou moins, de manière préférée de 2 µm ou moins et de manière très particulièrement préférée de 1 µm ou moins.

12. Assemblage selon la revendication 10, dans lequel la structure (S) n'est pas identique en matériau à la section (54) du composant isolant (53), laquelle est respectivement reliée à celui-ci entre les partenaires d'assemblage (51, 52) et s'étend de préférence sur ceux-ci respectivement de manière vitrifiée, présentant de préférence une quelconque des caractéristiques suivantes :
- la structure (S) n'est pas identique en matériau à la section (54) du composant isolant (53), laquelle est respectivement reliée à celui-ci entre les partenaires d'assemblage (51, 52) et s'étend de préférence sur ceux-ci respectivement de manière vitrifiée, et comprend un matériau céramique stable à haute température, tel que la forstérite, une céramique à base d'oxyde d'aluminium ou une céramique à base d'oxyde de zirconium, par exemple une céramique contenant de l'oxyde de zirconium stabilisé par de l'yttrium,
- la structure (S) n'est pas identique en matériau à la section (54) du composant isolant (53), laquelle est respectivement reliée à celui-ci entre les partenaires d'assemblage (51, 52) et s'étend de préférence sur ceux-ci respectivement de manière vitrifiée, et la structure (S) est disposée à peu près au centre dans la direction radiale sur la section (54) du composant isolant (53) et de préférence en saillie, au moins par sections, dans celle-ci.

13. Assemblage selon l'une quelconque des revendications 10 à 12, présentant au moins une quelconque des caractéristiques suivantes :
- la structure (S) comprend un renfort (56) et le renfort (56) comprend une feuille métallique, une tôle métallique ou un treillis, une tissage ou un tricot comprenant du métal, dans lequel le métal est de préférence constitué d'un acier ferritique ou comprend de l'acier,
- la structure (S) présente des arêtes qui présentent un rayon d'arrondi Rv inférieur à un dixième de millimètre, de préférence inférieur à un vingtième de millimètre et supérieur à 10 µm.

14. Assemblage selon l'une quelconque des revendications 7 à 13 précédentes, comprenant
le verre au moins en partie cristallisé et un partenaire d'assemblage,
dans lequel le verre au moins en partie cristallisé contient une proportion de verre résiduel inférieure à 10 %, de préférence inférieure à 5 %, par rapport au volume, dans lequel le verre au moins en partie cristallisé comprend des agrégats cristallins,
dans lequel les agrégats cristallins sont formés à partir d'une pluralité de cristaux,
dans lequel les cristallites présentent de préférence une forme aciculaire et/ou une forme de plaquette,
dans lequel les cristallites sont disposées en particulier de manière préférée avec une forme de rayon radial, telle que sphéroïdale et/ou en d'éventail, et/ou avec une forme de tige et/ou une forme de plaquette, de manière à traverser le verre au moins en partie cristallisé et comprenant en particulier un ou le composant isolant (53).

15. Utilisation d'un assemblage selon l'une quelconque des revendications 7 à 14 ou d'un produit selon la revendication 6 dans un capteur, tel qu'un capteur de gaz d'échappement, un capteur de pression, un capteur de particules, tel qu'un capteur de particules de suie et/ou un capteur de température et/ou dans un capteur de NOₓ et/ou dans un capteur d'oxygène, et/ou dans un passage pour un compresseur et/ou un compresseur électrique et/ou en tant que passage de courant électrique dans un élément d'échappement et/ou dans une pile à combustible et/ou dans un passage pour un réacteur chimique.
